# EUROPÄISCHE PATENTSCHRIFT

(11) **EP 3 794 713 B1**
(45) Veröffentlichungstag und Bekanntmachung des Hinweises auf die Patenterteilung: **09.03.2022**
(21) Anmeldenummer: 19736712.1
(22) Anmeldetag: 05.07.2019
(51) Int. Cl.: H02K 3/47, H02K 41/03

(54) **STATOR FÜR EINEN PLANARMOTOR**
STATOR FOR A PLANAR MOTOR
STATOR POUR UN MOTEUR PLANAIRE

(30) Priorität: 25.07.2018 DE 102018117953
(43) Veröffentlichungstag der Anmeldung: 24.03.2021
(73) Patentinhaber: Beckhoff Automation GmbH, 33415 Verl (DE)
(72) Erfinder: BRINKMANN, Rolf, 32107 Bad Salzuflen (DE); BENTFELD, Lukas, 33098 Paderborn (DE); PRÜSSMEIER, Uwe, 32657 Lemgo (DE)
(74) Vertreter: Patentanwaltskanzlei WILHELM & BECK
(86) Internationale Anmeldenummer: PCT/EP2019/068149
(87) Internationale Veröffentlichungsnummer: WO 2020/020607

(56) Entgegenhaltungen:
- US-A1- 2005 253 463
- US-A1- 2015 326 150

## Beschreibung

Die Erfindung betrifft eine Statoreinheit eines elektrischen Planarmotors und ein Statormodul eines elektrischen Planarmotors.

Planarantriebssysteme mit elektrischen Planarmotoren können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden. Die Druckschriften WO 2013/059934 A1, WO 2015/017933 A1, WO 2015/179962 A1,

WO 2015/184553 A1, WO 2015/188281 A1, WO 2017/004716 A1 beschreiben jeweils Planarantriebssysteme *(displacement devices),* welche einen elektromagnetischen Planarmotor mit einem permanenterregten Läufer und einem mehrere bestrombare Leiter umfassenden Stator umfassen.

Die Druckschrift US 2005/0253463 A1 offenbart eine Statoreinheit gemäß dem Oberbegriff des Anspruchs 1.

Aufgabe der vorliegenden Erfindung ist es, eine Statoreinheit und ein Statormodul für einen elektrischen Planarmotor anzugeben.

Diese Aufgabe wird durch eine Statoreinheit und ein Statormodul gemäß den unabhängigen Ansprüchen gelöst. Weiterbildungen sind jeweils in den abhängigen Ansprüchen angeben.

Eine Statoreinheit zum Antreiben eines Läufers eines elektrischen Planarmotors umfasst eine erste Anordnung von Statorlängslagen und eine zweite Anordnung von Statorschräg- oder - querlagen. Die Statorlängslagen umfassen erste Spulenleiter und die Statorschräg- oder -querlagen umfassen zweite Spulenleiter. Dabei sind die zweiten Spulenleiter dazu ausgebildet, mit zweiten Antriebsmagneten des Läufers wechselzuwirken, um den Läufer in einer ersten Richtung anzutreiben, und die ersten Spulenleiter sind dazu ausgebildet, mit ersten Antriebsmagneten des Läufers wechselzuwirken, um den Läufer in einer von der ersten Richtung verschiedenen zweiten Richtung anzutreiben. Die Statorlängslagen und die Statorschräg- oder -querlagen sind in einer zu der ersten und zweiten Richtung senkrecht orientierten dritten Richtung übereinander angeordnet. Die Statorlängslagen und die Statorschräg- oder -querlagen weisen in der dritten Richtung den gleichen mittleren Abstand von einer Statorfläche der Statoreinheit auf. Die Statorfläche ist dabei die dem Läufer zugewandte ebene Oberfläche der Statoreinheit.

Als mittlerer Abstand der Statorlängslagen wird dabei der Mittelwert aller Abstände der einzelnen Statorlängslagen von der Statorfläche bezeichnet. Als mittlerer Abstand der Statorschräg- oder -querlagen wird der Mittelwert aller Abstände der einzelnen Statorschräg- oder -querlagen von der Statorfläche bezeichnet.

Weisen die Statorlängslagen und die Statorschräg- oder -querlagen den gleichen mittleren Abstand zu der Statorfläche der Statoreinheit auf, so übt ein Antriebsstrom in den ersten Spulenleitern der Statorlängslagen in der zweiten Richtung annährend die gleiche Kraft auf einen über der Statorfläche angeordneten Läufer auf, wie derselbe Antriebsstrom in den zweiten Spulenleitern der Statorschräg- oder -querlagen in der ersten Richtung. Dadurch kann eine annährend symmetrische Kraftübertragung auf den Läufer erzielt werden.

Bei einer Weiterbildung der Statoreinheit weisen die erste Anordnung von Statorlängslagen und die zweite Anordnung von Statorschräg- oder -querlagen eine gemeinsame Mittenebene auf und die Statorlängslagen und die Statorschräg- oder -querlagen sind in der dritten Richtung jeweils symmetrisch zu der gemeinsamen Mittenebene angeordnet.

Indem die Statorlängslagen und die Statorschräg- oder -querlagen jeweils symmetrisch um die gemeinsame Mittenebene angeordnet sind, weist sowohl die erste Anordnung von Statorlängslagen, als auch die zweite Anordnung von Statorschräg- oder -querlagen den gleichen mittleren Abstand von der Statorfläche und einem in der dritten Richtung über oder unter der ersten und zweiten Anordnung angeordneten Läufer des Planarmotors auf.

Bei der resultierenden symmetrischen Anordnung der Statorlängslagen und der Statorschräg- oder -querlagen um die gemeinsame Mittelebene kann auf einfache Weise in der ersten und in der zweiten Richtung eine annähernd symmetrische Kraftübertragung auf den Läufer erzielt werden.

Bei einer Weiterbildung der Statoreinheit sind eine erste Gesamtzahl von Statorlängslagen und eine zweite Gesamtzahl von Statorschräg- oder -querlagen gleich. Dies ermöglicht eine besonders gleichmäßige Bestromung der Spulenleiter der Statorlängslagen und der Statorschräg- oder -querlagen.

Bei einer Weiterbildung der Statoreinheit sind eine oberste Statorlage der Statoreinheit und eine unterste Statorlage der Statoreinheit jeweils als Statorlängslage mit ersten Spulenleitern ausgebildet und eine zweitoberste Statorlage der Statoreinheit und eine zweitunterste Statorlage der Statoreinheit ist jeweils als Statorschräg- oder -querlage mit zweiten Spulenleitern ausgebildet. Insbesondere sind sowohl eine Statorlängslage, als auch eine Statorschräg- oder -querlage besonders nahe an dem Läufer positioniert.

Eine Weiterbildung der Statoreinheit weist im Inneren der Statoreinheit angeordnete Innenlagen auf, wobei die Innenlagen der Statoreinheit jeweils abwechselnd als zwei benachbarte Statorschräg- oder -querlagen und als zwei benachbarte Statorlängslagen ausgebildet sind.

Dadurch sind die Statorschräg- oder -querlagen und die Statorlängslagen in der dritten Richtung besonders homogen über die Statoreinheit verteilt. Wenn die Innenlagen der Statoreinheit abwechselnd jeweils zwei benachbarte Statorlängslagen und jeweils zwei benachbarte Statorschräg- oder -querlagen aufweisen, weist die Statoreinheit eine geringe Anzahl von Lagenwechseln von Statorschräg- oder -querlagen zu Statorlängslagen auf. Dadurch verringert sich die parasitäre Kapazitanz der Statorschräg- oder -querlagen und der Statorlängslagen, so dass die Spulenleiter besonders verlustarm mit einem Wechselstrom beaufschlagt werden können. Dies ist besonders dann der Fall, wenn alle in der dritten Richtung übereinanderliegenden ersten Spulenleiter der Statorlängslagen und alle in der dritten Richtung übereinanderliegenden zweiten Spulenleiter der Statorschräg- oder -querlagen in Serie oder parallel geschaltet sind, so dass Stromrichtung und Stromstärke in allen in der dritten Richtung übereinanderliegenden ersten Spulenleitern und in allen in der dritten Richtung übereinanderliegenden zweiten Spulenleitern jeweils identisch sind.

Bei einer Weiterbildung der Statoreinheit sind die ersten Spulenleiter als entlang der ersten Richtung länglich ausgedehnte Leiterstreifen und/oder Leiterbahnen ausgebildet und die zweiten Spulenleiter sind als entlang der zweiten Richtung länglich ausgedehnte Leiterstreifen und/oder Leiterbahnen ausgebildet. Dies ermöglicht eine besonders platzsparende Anordnung der Spulenleiter, der Statorschräg- oder -querlagen und der Statorlängslagen.

Bei einer Weiterbildung der Statoreinheit umfasst die erste Anordnung sechs Statorlängslagen und die zweite Anordnung umfasst sechs Statorschräg- oder -querlagen. Eine derartige Statoreinheit ist in der dritten Richtung kompakt ausgebildet und kann gelichzeitig eine hohe Kraft auf den Läufer übertragen.

Eine Weiterbildung der Statoreinheit ist als eine mehrlagige Leiterplatte ausgebildet. Eine derartige Statoreinheit kann besonders einfach und kostengünstig hergestellt werden.

Ein Statormodul zum Antreiben eines Läufers eines elektrischen Planarmotors umfasst eine Statoreinheit. Die Statoreinheit umfasst eine erste Anordnung von Statorlängslagen und eine zweite Anordnung von Statorschräg- oder -querlagen. Die Statorlängslagen umfassen erste Spulenleiter und die Statorschräg- oder -querlagen umfassen zweite Spulenleiter. Dabei sind die zweiten Spulenleiter dazu ausgebildet, mit zweiten Antriebsmagneten des Läufers wechselzuwirken, um den Läufer in einer ersten Richtung anzutreiben, und die ersten Spulenleiter sind dazu ausgebildet, mit ersten Antriebsmagneten des Läufers wechselzuwirken, um den Läufer in einer von der ersten Richtung verschiedenen zweiten Richtung anzutreiben. Die Statorlängslagen und die Statorschräg- oder -querlagen sind in einer zu der ersten und zweiten Richtung senkrecht orientierten dritten Richtung übereinander angeordnet. Die Statorlängslagen und die Statorschräg- oder -querlagen weisen in der dritten Richtung den gleichen mittleren Abstand von einer Statorfläche der Statoreinheit auf.

Bei einem derartigen Statormodul kann mittels der Statoreinheit eine annährend symmetrische Kraftübertragung auf den Läufer erzielt werden.

Die Erfindung wird nachfolgend anhand von Ausführungsbeispielen und unter Bezugnahme auf Figuren näher erläutert. Dabei zeigen jeweils in schematischer Darstellung
- Fig. 1: eine perspektivische Ansicht von Oben auf ein Planarantriebssystem mit einem Statormodul und einem Läufer;
- Fig. 2: eine perspektivische Ansicht von Unten auf den Läufer des Planarantriebssystems mit einer Magnetanordnung;
- Fig. 3: eine perspektivische Ansicht von Oben des Statormoduls des Planarantriebssystems;
- Fig. 4: eine Explosionsansicht einer Statoreinheit des Statormoduls mit einer ersten, zweiten, dritten und vierten Statorlage;
- Fig. 5: die Statorlagen eines ersten Statorsektors der Statoreinheit mit einzelnen Statorsegmenten;
- Fig. 6: die Statoreinheit in einer Schnittansicht;
- Fig. 7: eine erste weitere Statoreinheit für das Statormodul in einer Schnittansicht;
- Fig. 8: eine zweite weitere Statoreinheit für das Statormodul in einer Schnittansicht;
- Fig. 9: eine dritte weitere Statoreinheit für das Statormodul in einer Schnittansicht;
- Fig. 10: eine vierte weitere Statoreinheit für das Statormodul in einer Schnittansicht;
- Fig. 11: eine fünfte weitere Statoreinheit für das Statormodul in einer Schnittansicht;
- Fig. 12: eine sechste weitere Statoreinheit für das Statormodul in einer Schnittansicht; und
- Fig. 13: die erste weiteren Statoreinheit in einer weiteren Schnittansicht.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme.

Außerdem betrifft die Erfindung Weiterentwicklungen der in den deutschen Patentanmeldungen 10 2017 131 304.4, 10 2017 131 314.1, 10 2017 131 320.6, 10 2017 131 321.4, 10 2017 131 324.9 und 10 2017 131 326.5 offenbarten Planarantriebssysteme.

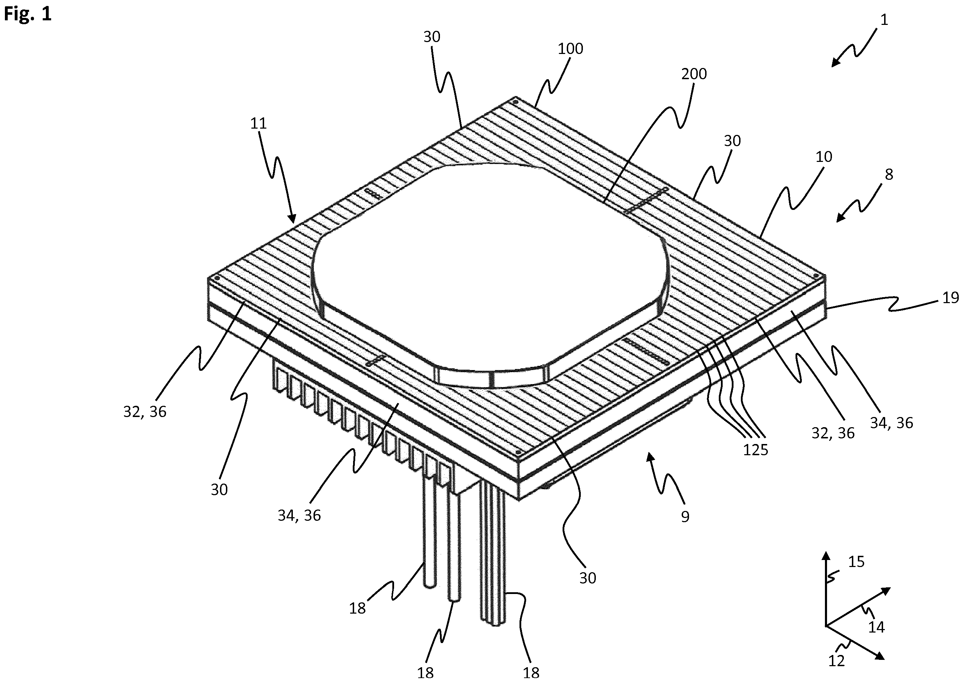

**Fig.** 1 zeigt eine perspektivische Ansicht von Oben auf ein Planarantriebssystem 1 mit einem Statormodul 10 und einem Läufer 200. Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten dritten oder vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu der dritten Richtung 15 orientiert und erstreckt sich über die gesamte Oberseite 8 der Statoreinheit 100 und des Statormoduls 10. Die Statoreinheit 100 umfasst an der Statorfläche 11 mindestens einen mit einem Antriebsstrom beaufschlagbaren ersten Spulenleiter 125. Die Statoreinheit 100 kann, wie dargestellt, an der Statorfläche 11 eine Mehrzahl der ersten Spulenleiter 125 aufweisen. Die ersten Spulenleiter 125 können jeweils mit einem Antriebsstrom beaufschlagt werden. Mittels der Antriebsströme in den ersten Spulenleitern 125 kann ein Magnetfeld erzeugt werden, welches den Läufer 200 in Wechselwirkung mit in Fig. 1 nicht dargestellten Antriebsmagneten des Läufers 200 antreibt. Der Läufer 200 und die Statoreinheit 100 mit den stromdurchflossenen ersten Spulenleitern 125 bilden einen elektromagnetischen Planarmotor.

Der Läufer 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste 12 Richtung und die zweite Richtung 14 sind voneinander verschieden und linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der dritten Richtung 15 orientiert. Indem der Läufer 200 zugleich in der ersten Richtung 12, als auch in der zweiten Richtung 14 angetrieben wird, kann der Läufer 200 über der Statorfläche 11 in einer beliebigen Richtung angetrieben werden. Der Läufer 200 kann im Betrieb in der dritten Richtung 15 schwebend über der Statorfläche 11 gehalten werden, beispielsweise durch eine magnetische Wechselwirkung zwischen den Antriebsmagneten und geeigneten Antriebsströmen in den ersten Spulenleitern 125. Neben einem Antreiben des Läufers 200 in der ersten und zweiten Richtung 12, 14 ist auch ein Antreiben in der dritten, vertikalen Richtung 15 möglich.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der dritten Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte. Zwischen der Statorfläche 11 und einer der Statorfläche 11 gegenüberliegenden Unterseite der Statoreinheit 100 weist die Statoreinheit 100 vier jeweils ebene Seitenflächen 32 auf, die an der Statorfläche 11 mit den Außenkanten 30 der Statorfläche 11 bündig abschließen. Die Seitenflächen 32 der Statoreinheit 100 sind senkrecht zu der Statorfläche 11 orientiert.

Das Modulgehäuse 19 ist, wie die Statorfläche 11 und die Statoreinheit 100 in einer Aufsicht auf die Statorfläche 11, rechteckig ausgebildet. Das Modulgehäuse 19 ist insbesondere in der Aufsicht auf die Statorfläche 11 quadratisch ausgebildet. Das Modulgehäuse 19 ist als ein flacher Quader bzw. als eine Platte ausgebildet, wobei die Ausdehnung des Modulgehäuse 19 in der dritten Richtung 15 kleiner ist als in der ersten und zweiten Richtung 12, 14. Eine der Statoreinheit 100 zugewandte Oberseite des Modulgehäuses 19 ist an die Unterseite der Statoreinheit 100 anschließend angeordnet. In der ersten und zweiten Richtung 12, 14 weisen die Statoreinheit 100 und das Modulgehäuse 19 im Wesentlichen die gleichen Abmessungen auf.

Zwischen der der Statoreinheit 100 zugewandten Oberseite des Modulgehäuse 19 und einer der Oberseite gegenüberliegenden Unterseite des Modulgehäuse 19 weist das Modulgehäuse 19 vier jeweils ebene Seitenflächen 34 auf. Die Seitenflächen 34 des Modulgehäuses 19 können, wie dargestellt, senkrecht zu der Statorfläche 11 orientiert sein. Die Seitenflächen 34 des Modulgehäuses 19 können fluchtend mit den Seitenflächen 32 der Statoreinheit 100 ausgerichtet sein und an die Seitenflächen 32 der Statoreinheit 100 anschließen. Bei einer alternativen, nicht dargestellten, Ausführungsform des Statormoduls 10 können die Seitenflächen 34 des Modulgehäuses 19 auch gegenüber den Seitenflächen 32 der Statoreinheit 100 in das Innere des Statormoduls 10 zurückversetzt angeordnet sein. Bei einer weiteren alternativen, nicht dargestellten, Ausführungsform können die Seitenflächen 34 des Modulgehäuses 19 auch an der Oberseite des Modulgehäuses 19 an die Seitenflächen 32 der Statoreinheit 100 anschließend angeordnet sein und sich entgegen der dritten Richtung 15 zur Unterseite des Modulgehäuses 19 hin in Richtung des Inneren des Statormoduls 10 verjüngen.

Das Statormodul 10 ist in einer Aufsicht auf die Statorfläche 11 rechteckig ausgebildet. Das Statormodul 10 weist zwischen der an der Oberseite 8 des Statormoduls 10 angeordneten Statorfläche 11 und der der Oberseite 8 gegenüberliegenden Unterseite 9 des Statormoduls 10 vier jeweils ebene Seitenflächen 36 auf. Die Seitenflächen 36 des Statormoduls 10 werden im Bereich der Statoreinheit 100 durch die Seitenflächen 32 der Statoreinheit 100 und im Bereich des Modulgehäuses 19 durch die Seitenflächen 34 des Modulgehäuses 19 gebildet.

Die Seitenflächen 36 des Statormoduls 10 schließen damit an der Statorfläche 11 mit den Außenkanten 30 der Statorfläche 11 ab und die Außenkanten 30 der Statorfläche 11 bilden an der Statorfläche 11 zugleich Außenkanten des Statormoduls 10. Insbesondere erstreckt sich die Statorfläche 11 in der ersten Richtung 12 und in der zweiten Richtung 14 jeweils zwischen zwei der Seitenflächen 36 des Statormoduls 10 und die Außenkanten 30 begrenzen die Ausdehnung der Statorfläche 11, der Statoreinheit 100 und des Statormoduls 10 an den Seitenflächen 36 des Statormoduls 10 in der ersten Richtung 12 und in der zweiten Richtung 14.

Die Seitenflächen 36 des Statormoduls 10 können, wie dargestellt, jeweils senkrecht zu der Statorfläche 11 ausgerichtet sein. Bei alternativen, nicht dargestellten Ausführungsformen des Statormoduls 10 können die Seitenflächen 36 des Statormoduls 10 im Bereich des Modulgehäuses 19 auch in Richtung des Inneren des Statormoduls 10 zurückversetzt sein oder sich von der Oberseite 8 zur Unterseite 9 hin in Richtung des Inneren des Statormoduls 10 verjüngen.

Während das Statormodul 10 an seiner durch die Statorfläche 11 gebildeten Oberfläche eben ausgebildet ist, kann das Statormodul 10 an der der Statorfläche 11 gegenüberliegenden Unterseite 9 des Statormoduls 10 nicht eben bzw. uneben ausgebildet sein. Insbesondere können an der Unterseite 9 des Statormoduls 10 oder an der Unterseite des Modulgehäuses 19 weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems 1 verbunden sein und Steuerdaten zum Steuern des Läufers 200 mit der Steuereinheit austauschen.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 14 eine Ausdehnung zwischen 100mm und 500mm, insbesondere zwischen 120mm und 350mm, insbesondere von 240mm aufweisen. Das Statormodul 10 kann in der dritten Richtung 15 eine Ausdehnung zwischen 10mm und 100mm, insbesondere zwischen 15mm und 60mm, insbesondere von 30mm aufweisen. Das Modulgehäuse 19 kann in der dritten Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11. Die Statoreinheit 100 kann in der dritten Richtung 15 eine Ausdehnung von 1mm bis 10mm, insbesondere von 2mm bis 5mm, insbesondere von 3,5mm bis 4,5mm, insbesondere von 3,7mm bis 4mm aufweisen.

Mehrere Exemplare des Statormoduls 10 können derart nebeneinander angeordnet werden, dass die Außenkanten 30 benachbarter Statormodule 10 aneinanderliegen und die Statorflächen 11 der Statormodule 10 eine zusammenhängende Arbeitsfläche bilden, über die der Läufer 200 unterbrechungsfrei bewegt werden kann. Da die Seitenflächen 36 des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinanderliegenden Seitenflächen 32 der Statoreinheiten 100 oder aneinanderliegenden Außenkanten 30 der Statorflächen 11 angeordnet werden.

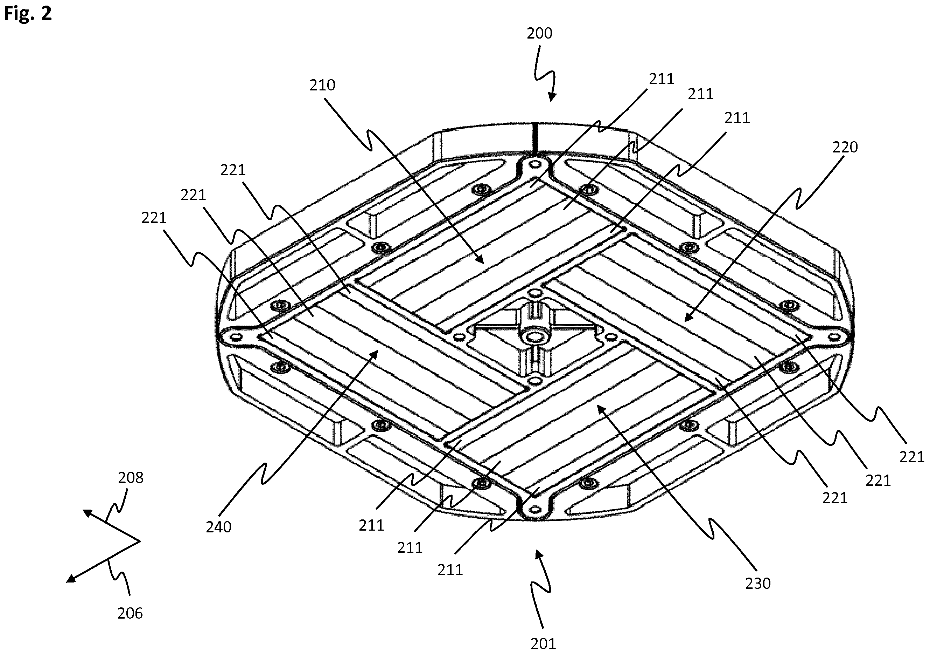

**Fig. 2** zeigt den Läufer 200 des Planarantriebssystems 1 in einer perspektivischen Ansicht von unten auf eine Unterseite des Läufers 200. Im Betrieb des Planarantriebssystem 1 ist die Unterseite des Läufers 200 der Statorfläche 11 des Statormoduls 10 zugewandt angeordnet. Der Läufer 200 weist an der Unterseite eine Magnetanordnung 201 auf. Die Magnetanordnung 201 ist rechteckig, insbesondere quadratisch, ausgebildet und umfasst mehrere Magneten. Die Unterseite des Läufers 200 ist, insbesondere im Bereich der Magneten der Magnetanordnung 201, eben bzw. planar ausgebildet. Im Betrieb ist die Unterseite des Läufers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete erste Antriebsmagnete 211 auf. Insbesondere können die erste und die dritte Magneteinheit 210, 230 jeweils drei erste Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte zweite Antriebsmagnete 221 auf. Insbesondere können die zweite und die vierte Magneteinheit 220, 240 jeweils drei zweite Antriebsmagnete 221 aufweisen.

Die erste und dritte Magneteinheit 210, 230 dient im Betrieb einem Antreiben des Läufers 200 in der zweiten Läuferrichtung 208 und die zweite und vierte Magneteinheit 220, 240 dient im Betrieb einem Antreiben des Läufers 200 in der ersten Läuferrichtung 206. Die ersten Antriebsmagneten 211 der ersten und dritten Magneteinheit 210, 230 und die zweiten Antriebsmagneten 221 der zweiten und vierten Magneteinheit 220, 240 sind jeweils senkrecht zu der ersten und der zweiten Läuferrichtung 206, 208 magnetisiert. Dabei weisen benachbarte Antriebsmagnete 211, 221 der Magneteinheiten 210, 220, 230, 240 jeweils entgegengesetzte Magnetisierungen auf.

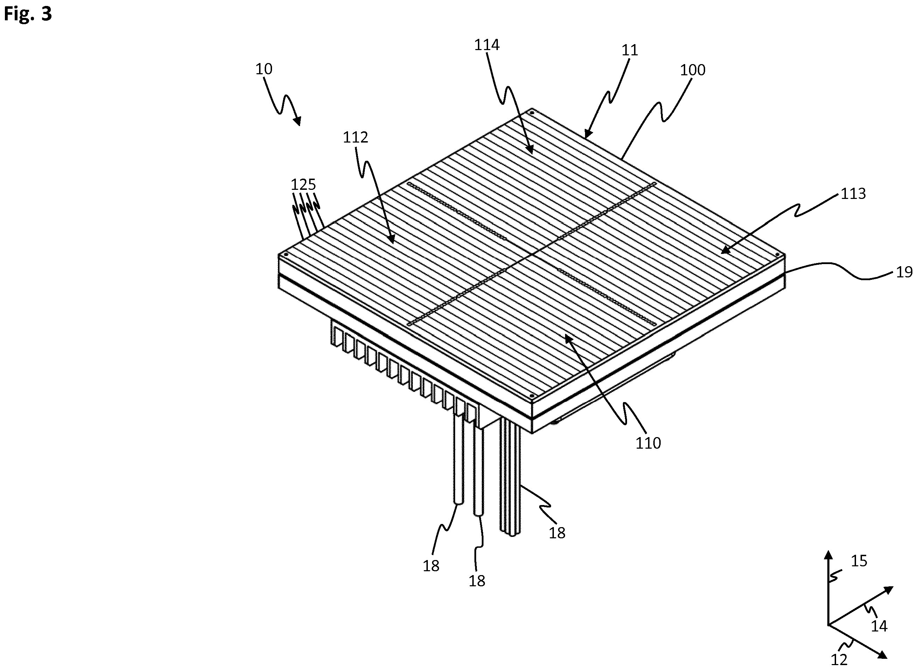

**Fig. 3** zeigt das Statormodul 10 des Planarantriebssystems 1 in einer perspektivischen Ansicht von Oben ohne den Läufer 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten ersten Spulenleiter 125.

Jeder der ersten Spulenleiter 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 sind in der ersten Richtung 12 in zwei nebeneinanderliegenden Reihen und in der zweiten Richtung 14 ebenfalls in zwei nebeneinanderliegenden Reihen aneinander anschließend angeordnet. Die Statorsektoren 110, 112, 113, 114 benachbarter Reihen sind ebenfalls jeweils aneinander anschließend angeordnet. In der ersten Richtung 12 umfasst die Statoreinheit 100 eine Reihe mit dem zweiten Statorsektor 112 und dem ersten Statorsektor 110 und eine weitere Reihe mit dem vierten Statorsektor 114 und dem dritten Statorsektor 113. In der zweiten Richtung 14 umfasst die Statoreinheit 100 eine Reihe mit dem ersten Statorsektor 110 und dem dritten Statorsektor 113 und eine weitere Reihe mit dem zweiten Statorsektor 112 und dem vierten Statorsektor 114.

Die Statorsektoren 110, 112, 113, 114 weisen in der ersten Richtung 12 und in der zweiten Richtung 14 jeweils eine Ausdehnung auf, die halb so groß ist wie die Ausdehnung der Statoreinheit 100 bzw. die Ausdehnung des Statormoduls 10 in der entsprechenden Richtung 12, 14. Die Grenzen der Statorsektoren 110, 112, 113, 114 verlaufen damit in der ersten und in der zweiten Richtung 12, 14 jeweils in der Mitte der Statoreinheit 100 und schneiden sich im Zentrum der Statoreinheit 100. Die Statorsektoren 110, 112, 113, 114 umfassen jeweils ein Viertel der Fläche, d.h. einen Quadranten, der Statoreinheit 100.

Bei der in Fig. 3 dargestellten Statoreinheit 100 des Statormoduls 10 umfasst die Statorlage an der Statorfläche 11 lediglich erste Spulenleiter 125, welche entlang der ersten Richtung 12 länglich ausgedehnt und entlang einer zu der ersten Richtung 12 senkrechten Richtung nebeneinander und aneinander anschließend angeordnet sind. Sind die erste Richtung 12 und die zweite Richtung 14, wie in Fig. 3 dargestellt, senkrecht zueinander orientiert, so sind die ersten Spulenleiter 125 entlang der zweiten Richtung 14 nebeneinander und aneinander anschließend angeordnet.

Neben den in Fig. 3 dargestellten ersten Spulenleitern 125 umfasst die Statoreinheit 100 in Fig. 3 nicht dargestellte zweite Spulenleiter. Die zweiten Spulenleiter sind entlang der zweiten Richtung 14 länglich ausgedehnt und in einer zu der zweiten Richtung 14 senkrechten Richtung nebeneinander und aneinander anschließend angeordnet. Sind die zweite Richtung 14 und die erste Richtung 12 senkrecht zueinander orientiert, so sind die zweiten Spulenleiter entlang der ersten Richtung 12 nebeneinander und aneinander anschließend angeordnet.

Innerhalb der Statorsektoren 110, 112, 113, 114 sind die ersten Spulenleiter 125 und die zweiten Spulenleiter in mehreren übereinanderliegenden Statorlagen oder Statorebenen angeordnet, wobei jede der Statorlagen entweder ausschließlich erste Spulenleiter 125 oder ausschließlich zweite Spulenleiter umfasst. Von der Ausdehnung der ersten Spulenleiter 125 und der zweiten Spulenleiter abgesehen und soweit im Folgenden keine Unterschiede beschrieben werden, sind die Statorsektoren 110, 112, 113, 114 auf den unterschiedlichen Statorlagen identisch ausgebildet.

Die in Fig. 3 sichtbare Statorlage an der Statorfläche 11 bildet eine erste Statorlage der Statoreinheit 100. In der dritten Richtung 15 unterhalb der ersten Statorlage umfasst die Statoreinheit 100 mindestens noch eine zweite Statorlage, eine dritte Statorlage und eine vierte Statorlage.

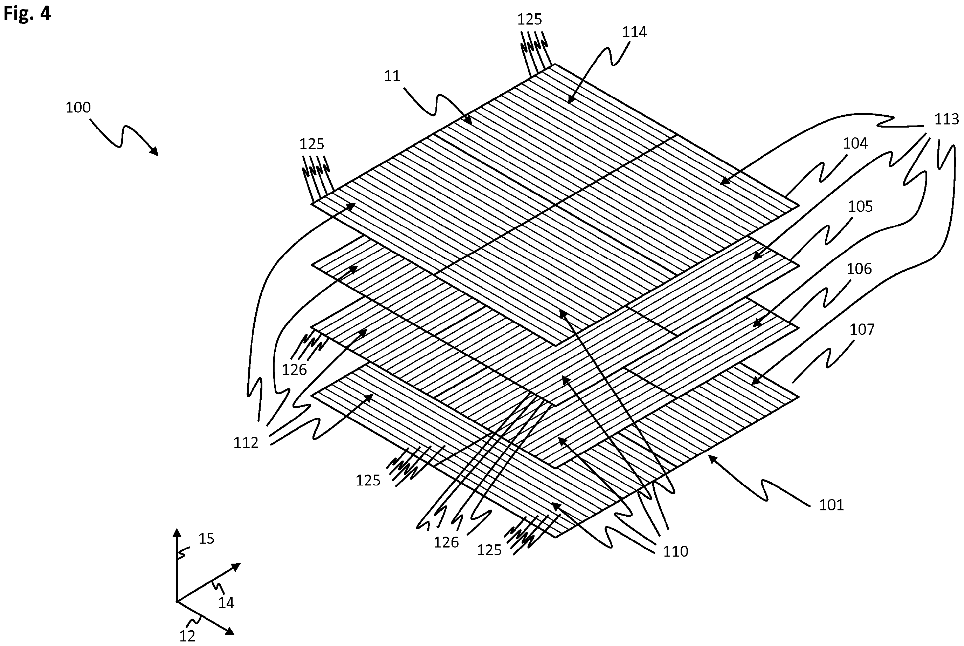

**Fig. 4** zeigt eine schematische perspektivische Darstellung einer Explosionsansicht der Statoreinheit 100 mit den einzelnen Statorlagen.

Die Statoreinheit 100 umfasst in der dritten Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet, wie es für die in Fig. 3 dargestellte erste Statorlage 104 an der Statorfläche 11 der Statoreinheit 100 beschrieben wird.

Die Statorsektoren 110, 112, 113, 114 umfassen in der vierten Statorlage 107, wie in der ersten Statorlage 104, entlang der ersten Richtung 12 länglich ausgedehnte und in der zu der ersten Richtung 12 senkrecht orientierten Richtung nebeneinander und aneinander anschließend angeordnete erste Spulenleiter 125. In der zweiten Statorlage 105 und in der dritten Statorlage 106 umfassen die Statorsektoren 110, 112, 113, 114 zweite Spulenleiter 126. Soweit im Folgenden keine Unterschiede beschrieben werden, sind die zweiten Spulenleiter 126 ausgebildet, wie es für die ersten Spulenleiter 125 in der ersten Statorlage 104 und in der vierten Statorlage 107 beschrieben wird. Anders als die ersten Spulenleiter 125 der ersten und vierten Statorlage 104, 107, sind die zweiten Spulenleiter 126 der zweiten und dritten Statorlage 105, 106 entlang der zweiten Richtung 14 länglich ausgedehnt und in der zu der zweiten Richtung 14 senkrecht orientierten Richtung nebeneinander und aneinander anschließend angeordnet.

Die Statorsektoren 110, 112, 113, 114 umfassen in der ersten und vierten Statorlage 104, 107 ausschließlich die entlang der ersten Richtung 12 länglich ausgedehnten ersten Spulenleiter 125 und nicht auch noch zusätzlich die entlang der zweiten Richtung 14 länglich ausgedehnten zweiten Spulenleiter 126. Ebenso umfassen die Statorsektoren 110, 112, 113, 114 in der zweiten und dritten Statorlage 105, 106 ausschließlich die entlang der zweiten Richtung 14 länglich ausgedehnten zweiten Spulenleiter 126 und nicht auch noch zusätzlich die entlang der ersten Richtung 12 länglich ausgedehnten ersten Spulenleiter 125.

Die Statorsektoren 110, 112, 113, 114 weisen in allen Statorlagen 104, 105, 106, 107 jeweils die gleichen Abmessungen auf. Insbesondere weisen die Statorsektoren 110, 112, 113, 114 in allen Statorlagen 104, 105, 106, 107 in der ersten Richtung 12 und in der zweiten Richtung 14 jeweils gleiche Abmessungen auf.

Die Anzahl und Anordnung der ersten Spulenleiter 125 ist in den einzelnen übereinanderliegenden Statorlagen 104, 107 mit ersten Spulenleitern 125, insbesondere in der ersten und vierten Statorlage 104, 107, identisch. Insbesondere sind die ersten Spulenleiter 125 in der dritten Richtung 15 übereinanderliegend angeordnet. Außerdem ist die Anzahl und Anordnung der zweiten Spulenleiter 126 in den einzelnen übereinanderliegenden Statorlagen 105, 106 mit zweiten Spulenleitern 126, insbesondere in der zweiten und dritten Statorlage 105, 106, identisch. Insbesondere sind die zweiten Spulenleiter 126 in der dritten Richtung 15 übereinanderliegend angeordnet.

Die Spulenleiter 125, 126 übereinander angeordneter Statorlagen 104, 105, 106, 107 sind jeweils elektrisch isoliert voneinander ausgebildet. Beispielsweise kann die Statoreinheit 100 als eine mehrlagige Leiterplatte ausgebildet sein und die Statorlagen 104, 105, 106, 107 können jeweils als voneinander isolierte Leiterbahnlagen der mehrlagigen Leiterplatte ausgebildet sein.

Die Statorsektoren 110, 112, 113, 114 sind unabhängig voneinander bestrombar ausgebildet. Insbesondere sind die ersten Spulenleiter 125 und die zweiten Spulenleiter 126 der Statorsektoren 110, 112, 113, 114 auf der Statoreinheit 100 elektrisch isoliert voneinander ausgebildet. Das heißt insbesondere, dass die Spulenleiter 125, 126 des ersten Statorsektors 110 elektrisch isoliert von den Spulenleitern 125, 126 des zweiten Statorsektors 112, von den Spulenleitern 125, 126 des dritten Statorsektors 113 und von den Spulenleitern 125, 126 des vierten Statorsektors 114 ausgebildet sind. Außerdem sind die Spulenleiter 125, 126 des zweiten Statorsektors 112 elektrisch isoliert von den Spulenleitern 125, 126 des ersten Statorsektors 110, von den Spulenleitern 125, 126 des dritten Statorsektors 113 und von den Spulenleitern 125, 126 des vierten Statorsektors 114 ausgebildet. Außerdem sind die Spulenleiter 125, 126 des dritten Statorsektors 113 elektrisch isoliert von den Spulenleitern 125, 126 des ersten Statorsektors 110, von den Spulenleitern 125, 126 des zweiten Statorsektors 112 und von den Spulenleitern 125, 126 des vierten Statorsektors 114 ausgebildet. Schließlich sind die Spulenleiter 125, 126 des vierten Statorsektors 114 elektrisch isoliert von den Spulenleitern 125, 126 des ersten Statorsektors 110, von den Spulenleitern 125, 126 des zweiten Statorsektors 112 und von den Spulenleitern 125, 126 des dritten Statorsektors 113 ausgebildet.

Während die Spulenleiter 125, 126 der einzelnen Statorsektoren 110, 112, 113, 114 auf der Statoreinheit 100 jeweils elektrisch isoliert von den Spulenleitern 125, 126 der übrigen Statorsektoren 110, 112, 113, 114 ausgebildet sind, können die Spulenleiter 125, 126 innerhalb der einzelnen Statorsektoren 110, 112, 113, 114 jeweils elektrisch leitend miteinander verbunden sein. Insbesondere können innerhalb der Statorsektoren 110, 112, 113, 114 jeweils alle in der dritten Richtung 15 übereinanderliegenden ersten Spulenleiter 125, insbesondere alle in der dritten Richtung 15 übereinanderliegenden ersten Spulenleiter 125 der ersten Statorlage 104 und der vierten Statorlage 107, elektrisch leitend miteinander verbunden sein. Dabei können alle in der dritten Richtung 15 übereinanderliegenden ersten Spulenleiter 125 jeweils derart elektrisch leitend miteinander verbunden sein, dass in den übereinanderliegenden ersten Spulenleitern 125 jeweils der gleiche Spulenstrom fließt. Beispielsweise können jeweils alle in der dritten Richtung 15 übereinanderliegenden ersten Spulenleiter 125 der Statorsektoren 110, 112, 113, 114 in Reihe geschaltet sein.

Ebenso können innerhalb der Statorsektoren 110, 112, 113, 114 jeweils alle in der dritten Richtung 15 übereinanderliegenden zweiten Spulenleiter 126, insbesondere alle in der dritten Richtung 15 übereinanderliegenden zweiten Spulenleiter 126 der zweiten Statorlage 105 und der dritten Statorlage 106, elektrisch leitend miteinander verbunden sein. Dabei können alle in der dritten Richtung 15 übereinanderliegenden zweiten Spulenleiter 126 jeweils derart elektrisch leitend miteinander verbunden sein, dass in den übereinanderliegenden zweiten Spulenleitern 126 jeweils der gleiche Spulenstrom fließt. Beispielsweise können innerhalb der einzelnen Statorsektoren 110, 112, 113, 114 jeweils alle übereinanderliegenden zweiten Spulenleiter 126 in Reihe geschaltet sein.

Die Spulenleiter 125, 126 der Statorsektoren 110, 112, 113, 114 sind innerhalb der Statorlagen 104, 105, 106, 107 jeweils zu Statorsegmenten zusammengefasst.

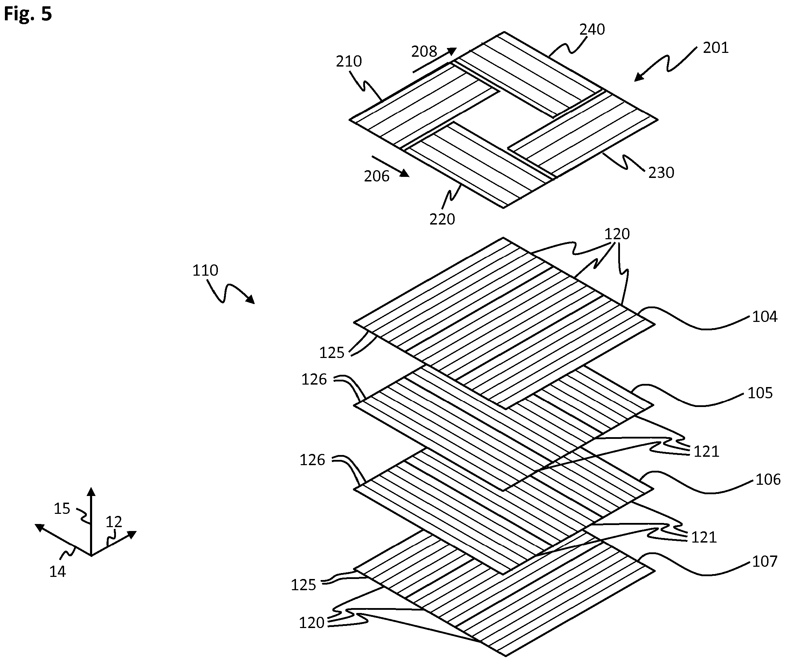

**Fig. 5** zeigt eine schematische Darstellung der Statorlagen 104, 105, 106, 107 des ersten Statorsektors 110 mit den einzelnen Statorsegmenten.

Die Spulenleiter 125, 126 des ersten Statorsektors 110 sind innerhalb der Statorlagen 104, 105, 106, 107 jeweils zu Statorsegmenten 120, 121 zusammengefasst. Der erste Statorsektor 110 umfasst in jeder Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Spulenleiter 125, 126. Der erste Statorsektor 110 umfasst in der ersten und vierten Statorlage 104, 107 jeweils drei erste Statorsegmente 120 und in der zweiten und dritten Statorlage 105, 106 jeweils drei zweite Statorsegmente 121. Die ersten Statorsegmente 120 umfassen jeweils sechs Nebeneinanderliegende der entlang der zweiten Richtung 14 nebeneinander angeordneten und entlang der ersten Richtung 12 länglich ausgedehnten ersten Spulenleiter 125. Die zweiten Statorsegmente 121 umfassen jeweils sechs Nebeneinanderliegende der entlang der ersten Richtung 12 nebeneinander angeordneten und entlang der zweiten Richtung 14 länglich ausgedehnten zweiten Spulenleiter 126. Bei alternativen, nicht dargestellten Ausführungsformen der Statoreinheit 100 können die ersten Statorsegmente 120 und/oder die zweiten Statorsegmente 121 auch eine andere Anzahl nebeneinander angeordneter Spulenleiter 125, 126 umfassen. Insbesondere können die ersten Statorsegmente 120 und/oder die zweiten Statorsegmente 121 acht nebeneinander angeordnete Spulenleiter 125, 126 umfassen. Bei alternativen, nicht dargestellten Ausführungsformen der Statoreinheit 100 kann der erste Statorsektor 110 auch eine andere Anzahl nebeneinander und aneinander anschließend angeordneter Statorsegmente 120, 121 umfassen.

Der erste Statorsektor 110 der Statoreinheit 100 umfasst damit in der ersten Statorlage 104 und in der vierten Statorlage 107 ausschließlich erste Spulenleiter 125, die entlang der ersten Richtung 12 länglich ausgedehnt sind, und in der zweiten Statorlage 105 und in der dritten Statorlage 106 ausschließlich zweite Spulenleiter 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und vierten Statorlage 104, 107 des ersten Statorsektors 110 in der ersten Richtung 12 über die drei in der ersten Richtung 12 nebeneinander angeordneten zweiten Statorsegmente 121 der zweiten und dritten Statorlage 105, 106 des ersten Statorsektors 110 erstreckt. Außerdem erstrecken sich die zweiten Statorsegmente 121 der zweiten und dritten Statorlage 105, 106 des ersten Statorsektors 110 in der zweiten Richtung 14 über alle in der zweiten Richtung 14 nebeneinander angeordneten ersten Statorsegmente 120 der ersten und vierten Statorlage 104, 107 des ersten Statorsektors 110.

Die Anordnung der Spulenleiter 125, 126 in den Statorlagen 104, 105, 106, 107 des zweiten Statorsektors 112, des dritten Statorsektors 113 und des vierten Statorsektors 114 entspricht der in Fig. 5 dargestellten Anordnung der Spulenleiter 125, 126 in den Statorlagen 104, 105, 106, 107 des ersten Statorsektors 110.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die ersten Spulenleiter 125 der ersten Statorsegmente 120 erzeugten Magnetfeld wechselwirken, um den Läufer 200 entlang der zweiten Richtung 14 anzutreiben. Die zweite Magneteinheit 220 und die vierte Magneteinheit 240 können im Betrieb mit dem durch die zweiten Spulenleiter 126 der zweiten Statorsegmente 121 erzeugten Magnetfeld wechselwirken, um den Läufer 200 entlang der ersten Richtung 12 anzutreiben.

Alternativ kann der Läufer 200, anders als in Fig. 5 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Läufers 200 in die erste Richtung 12 und die zweite und die vierte Magneteinheit 220, 240 mit dem Magnetfeld der ersten Statorsegmente 120 zum Antreiben des Läufers 200 in die zweite Richtung 14 zusammen.

Bei der Statoreinheit 100 sind die ersten Spulenleiter 125 damit dazu ausgebildet, mit den ersten Antriebsmagneten 211 des Läufers 200 wechselzuwirken, um den Läufer 200 in der zu der ersten Richtung 12 senkrechten Richtung anzutreiben. Die zweiten Spulenleiter 126 sind dazu ausgebildet, mit den zweiten Antriebsmagneten 221 des Läufers 200 wechselzuwirken, um den Läufer 200 in der zu der zweiten Richtung 14 senkrechten Richtung anzutreiben.

Die ersten Spulenleiter 125 sind räumlich in der zu der ersten Richtung 12 senkrechten Richtung um jeweils ein Drittel einer wirksamen ersten Wellenlänge der mit den ersten Spulenleitern 125 wechselwirkenden ersten Antriebsmagnete 211 der ersten und dritten Magneteinheit 210, 230 versetzt angeordnet. Die zweiten Spulenleiter 126 sind räumlich in der zu der zweiten Richtung 14 senkrechten Richtung um jeweils ein Drittel einer wirksamen zweiten Wellenlänge der mit den zweiten Spulenleitern 126 wechselwirkenden zweiten Antriebsmagnete 221 der zweiten und vierten Magneteinheit 220, 240 versetzt angeordnet.

Die Spulenleiter 125, 126 der einzelnen Statorsegmente 120, 121 sind jeweils unabhängig von den Spulenleitern 125, 126 der übrigen Statorsegmente 120, 121 mit den Antriebsströmen bestrombar. Insbesondere hängen die Antriebsströme in einem der Statorsegmente 120, 121 nicht zwingend von Antriebsströmen in einem anderen der Statorsegmente 120, 121 ab. Außerdem können die Spulenleiter 125, 126 eines der Statorsegmente 120, 121 mit Antriebsströmen beaufschlagt werden, während die Spulenleiter 125, 126 eines anderen, beispielsweise eines benachbarten, Statorsegments 120, 121 stromlos sind. Die Spulenleiter 125, 126 der einzelnen Statorsegmente 120, 121 sind auf der Statoreinheit 100 elektrisch isoliert von den Spulenleitern 125, 126 der übrigen Statorsegmente 120, 121 ausgeführt. Die Spulenleiter 125, 126 unterschiedlicher Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Spulenleiter 125, 126 in den einzelnen Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Spulenleiter 125, 126 zu Dreiphasensystemen mit einem gemeinsamen Sternpunkt zusammengeschaltet sein. Die Dreiphasensysteme können jeweils sechs benachbarte erste Spulenleiter 125 oder sechs benachbarte zweite Spulenleiter 126 umfassen. Die Anzahl benachbarter Spulenleiter 125, 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Spulenleiter 125, 126 zu Mehrphasensystemen werden zur Bestromung der Spulenleiter 125, 126 weniger Kontakte benötigt als bei einer separaten Bestromung der einzelnen Spulenleiter 125, 126. Dadurch wird der für die Bestromung der ersten Spulenleiter 125, 126 benötigte Hardwareaufwand, insbesondere die Anzahl der für die Bestromung benötigten Stromerzeugungseinheiten, reduziert.

Die Statorsektoren 110, 112, 113, 114 können, wie in den Fig. 4 und 5 dargestellt, in jeder Statorlage 104, 105, 106, 107 jeweils achtzehn Spulenleiter 125, 126 umfassen. Jeweils sechs benachbarte Spulenleiter 125, 126 können zu einem Dreiphasensystem verschaltet sein und die Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Spulenleiter 125, 126, die im Wesentlichen in der gleichen Richtung 12, 14 ausgedehnt sind und in den Statorlagen 104, 105, 106, 107 übereinanderliegen, in Serie zu einem gemeinsamen Dreiphasensystem verschaltet sein. Die Spulenleiter 125, 126 können dabei derart verschaltet sein, dass in der dritten Richtung 15 übereinanderliegende Spulenleiter 125, 126 jeweils mit dem gleichen Antriebsstrom beaufschlagt werden. Die Dreiphasensysteme weisen damit drei Phasen auf, die aus in den Statorlagen 104, 105, 106, 107 übereinanderliegenden Spulenleiter 125, 126 zusammengeschaltet sind.

Beispielsweise können in den einzelnen Statorlagen 104, 105, 106, 107 jeweils alle übereinanderliegenden und parallel ausgerichteten Spulenleiter 125, 126 in Serie geschaltet sein. Insbesondere können die ersten Spulenleiter 125 von übereinanderliegenden, insbesondere von in der ersten Statorlage 104 und in der vierten Statorlage 107 übereinanderliegenden Dreiphasensystemen, sowie die zweiten Spulenleiter 126 von übereinanderliegenden, insbesondere von in der zweiten Statorlage 105 und in der dritten Statorlage 106 übereinanderliegenden Dreiphasensystemen jeweils seriell zu einem gemeinsamen Dreiphasensystem verschaltet sein. Dabei können jeweils alle in der dritten Richtung 15 übereinanderliegenden und parallel orientierten Spulenleiter 125, 126 in Serie geschaltet sein.

Insbesondere sind bei der Statoreinheit 100 innerhalb der einzelnen ersten Statorsegmente 120 die entlang der ersten Richtung 12 länglich ausgedehnten ersten Spulenleiter 125 jeweils zu Mehrphasensystemen mit einem gemeinsamen Sternpunkt verschaltet. Dabei sind die einzelnen Mehrphasensysteme verschiedener erster Statorsegmente 120 jeweils unabhängig voneinander bestrombar. Ebenso sind alle zweiten Spulenleiter 126 der einzelnen zweiten Statorsegmente 121 jeweils zu weiteren Mehrphasensystemen verschaltet. Die einzelnen weiteren Mehrphasensysteme der zweiten Statorsegmente 121 sind jeweils unabhängig voneinander und unabhängig von den Mehrphasensystemen der ersten Statorsegmente 120 bestrombar. Insbesondere sind die ersten Spulenleiter 125 der ersten Statorsegmente 120 und die zweiten Spulenleiter 126 der zweiten Statorsegmente 121 jeweils zu Dreiphasensystemen verschaltet. Die ersten Spulenleiter 125 und die zweiten Spulenleiter 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Statoreinheit 100 kann als eine mehrlagige Einheit ausgebildet sein, wobei die Statorlagen 104, 105, 106, 107 mit den ersten und zweiten Spulenleitern 125, 126 jeweils über isolierende Zwischenschichten mechanisch miteinander verbunden sind. Beispielsweise kann die Statoreinheit 100 als eine gedruckte Schaltung bzw. Leiterplatte, auch *printed circuit board* (PCB) genannt, ausgeführt sein. Insbesondere kann die Statoreinheit 100 als eine mehrlagige Leiterplatte ausgebildet sein, wobei die Statorlagen 104, 105, 106, 107 jeweils in unterschiedlichen Lagen der Leiterplatte angeordnet sind. Die Spulenleiter 125, 126 können auf den Lagen der Leiterplatte als Leiterstreifen mit einer Dicke zwischen 10µm und 500µm ausgebildet sein, insbesondere können die Leiterstreifen eine Dicke zwischen 50µm und 250µm aufweisen.

Die Statoreinheit 100 kann im Bereich der Statorsegmente 120, 121 jeweils Verbindungsstrukturen aufweisen. Die Verbindungsstrukturen können auf den Spulenleitern 125, 126 oder zwischen den Spulenleitern 125, 126 der Statorsegmente 120, 121 angeordnet sein.

Die Verbindungsstrukturen können als Horizontalverbindungsstrukturen oder als Vertikalverbindungsstrukturen ausgebildet sein. Die Horizontalverbindungsstrukturen sind in einer der Statorlagen 104, 105, 106, 107 angeordnet und erstrecken sich in der durch die erste und zweite Richtung 12, 14 aufgespannten Ebene. Die Horizontalverbindungsstrukturen können länglich ausgedehnt sein. Die Horizontalverbindungsstrukturen können, wie die Spulenleiter 125, 126, als Leiterbahnen oder Leiterbahnabschnitte einer Lage einer Leiterplatte der Statoreinheit 100 ausgebildet sein.

Die Horizontalverbindungsstrukturen können als Parallelverbinder ausgebildet sein und parallel zu den Spulenleitern 125, 126 der Statorlage 104, 105, 106, 107, in der sie angeordnet sind, verlaufen. Beispielsweise sind als Parallelverbinder ausgebildete und in einer Statorlage 104, 107 mit ersten Spulenleitern 125 angeordnete Horizontalverbindungsstrukturen entlang der ersten Richtung 12 länglich ausgedehnt. Als Parallelverbinder ausgebildete und in einer Statorlage 105, 106 mit zweiten Spulenleitern 126 angeordnete Horizontalverbindungsstrukturen sind entsprechend entlang der zweiten Richtung 14 länglich ausgedehnt.

Die Horizontalverbindungsstrukturen können auch als Querverbinder ausgebildet sein und senkrecht zu den Spulenleitern 125, 126 der Statorlage 104, 105, 106, 107, in der sie angeordnet sind, verlaufen. Beispielsweise sind als Querverbinder ausgebildete und in einer Statorlage 104, 107 mit ersten Spulenleitern 125 angeordnete Horizontalverbindungsstrukturen entlang der zu der ersten Richtung 12 senkrechten Richtung, bei der Statoreinheit 100 entlang der zweiten Richtung 14, länglich ausgedehnt. Als Querverbinder ausgebildete und in einer Statorlage 105, 106 mit zweiten Spulenleitern 126 angeordnete Horizontalverbindungsstrukturen sind entsprechend entlang der zu der zweiten Richtung 14 senkrechten Richtung, bei der Statoreinheit 100 entlang der ersten Richtung 12, länglich ausgedehnt.

Ein Teil der Verbindungstrukturen kann als Vertikalverbindungsstrukturen ausgebildet sein, welche Leiterstrukturen, insbesondere Spulenleiter 125, 126 oder Horizontalverbindungsstrukturen, die in den einzelnen Statorsegmenten 120, 121 in verschiedenen Statorlagen 104, 105, 106, 107 übereinander angeordnet sind, miteinander verbinden. Die Vertikalverbindungsstrukturen können als Durchkontaktierungen oder als Vias *(vertical interconnect access)* zwischen den einzelnen Statorlagen 104, 105, 106, 107 der Leiterplatte der Statoreinheit 100 ausgebildet sein.

Die schematischen Darstellungen der vorangegangenen Figuren zeigen die Spulenleiter 125, 126 jeweils als rechteckig ausgebildete und sich über die gesamten Statorsektoren 110, 112, 113, 114 erstreckende Leiterstreifen. Die Spulenleiter 125, 126 können in von den Verbindungsstrukturen entfernten Bereichen der Statoreinheit 100 ausgebildet sein, wie es in den vorangegangenen Figuren schematisch dargestellt ist. Insbesondere im Bereich der Verbindungsstrukturen kann die Form der Spulenleiter 125, 126 jedoch auch von den schematischen Darstellungen der vorangegangenen Figuren abweichen. Insbesondere können die ersten Spulenleiter 125 der ersten Statorsegmente 120 im Bereich der Verbindungsstrukturen in der zu der ersten Richtung 12 senkrechten Richtung, bei der Statoreinheit 100 in der zweiten Richtung 14, schmaler ausgebildet sein als in den von den Verbindungsstrukturen entfernten Bereichen. Ebenso können die zweiten Spulenleiter 126 der zweiten Statorsegmente 121 im Bereich der Verbindungsstrukturen in der der zweiten Richtung 14 senkrechten Richtung, bei der Statoreinheit 100 in der ersten Richtung 12, schmaler ausgebildet sein als in den von den Verbindungsstrukturen entfernten Bereichen.

Die ersten Spulenleiter 125 der ersten Statorsegmente 120 können in der ersten Richtung 12 auch kürzer ausgebildet sein, als es in den vorangegangenen Figuren schematisch dargestellt ist. Die zweiten Spulenleiter 126 der zweiten Statorsegmente 121 können in der zweiten Richtung 14 auch kürzer ausgebildet sein, als es in den vorangegangenen Figuren schematisch dargestellt ist. Insbesondere müssen sich die ersten Spulenleiter 125 der einzelnen ersten Statorsegmente 120 in der ersten Richtung 12 nicht jeweils vollständig über die ersten Statorsegmente 120 erstrecken und die zweiten Spulenleiter 126 der einzelnen zweiten Statorsegmente 121 müssen sich in der ersten Richtung 12 nicht jeweils vollständig über die zweiten Statorsegmente 121 erstrecken. In den sich dadurch ergebenden Freiräumen können Horizontalverbindungsstrukturen und/oder Vertikalverbindungsstrukturen angeordnet sein.

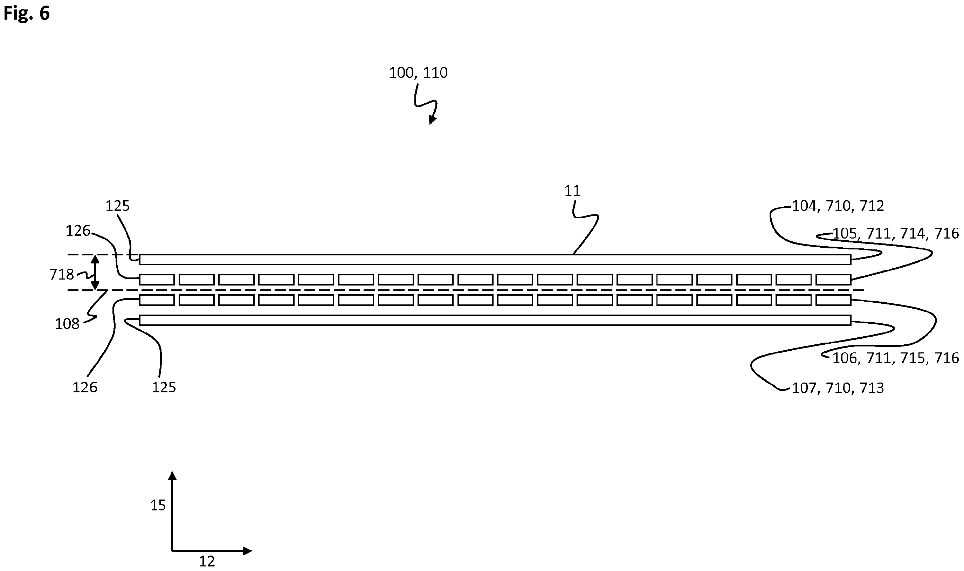

**Fig. 6** zeigt eine schematische, nicht maßstabsgetreue Darstellung der Statoreinheit 100 des Statormoduls 10 in einer Schnittansicht. Die Schnittebene ist dabei senkrecht zu der zweiten Richtung 14 orientiert. In Fig. 6 sind lediglich die Spulenleiter 125, 126 und Statorlagen 104, 105, 106, 107 des ersten Statorsektors 110 dargestellt. Die Spulenleiter 125, 126 und Statorlagen 104, 105, 106, 107 des zweiten, dritten und vierten Statorsektors 112, 113, 114 sind aufgebaut, wie es für die Spulenleiter 125, 126 und die Statorlagen 104, 105, 106, 107 des ersten Statorsektors 110 beschrieben wird.

Die Statoreinheit 100 weist eine erste Anordnung von Statorlängslagen 710 und eine zweite Anordnung von Statorschräg- oder -querlagen 711 auf. Die Statorlängslagen 710 werden von allen Statorlagen 104, 107 der Statoreinheit 100 gebildet, die die entlang der ersten Richtung 12 ausgedehnten ersten Spulenleiter 125 umfassen. Die Statorschräg- oder -querlagen 711 werden von allen Statorlagen 105, 106 der Statoreinheit 100 gebildet, die die entlang der zweiten Richtung 14 ausgedehnten zweiten Spulenleiter 126 umfassen. Die erste und die zweite Richtung 12, 14 sind dabei voneinander verschieden und können insbesondere, wie bei der Statoreinheit 100, senkrecht zueinander orientiert sein. Die erste und die zweite Richtung 12, 14 können auch einen anderen Winkel als 90°, beispielsweise einen Winkel von 45° zueinander aufweisen. Insbesondere müssen die in der ersten Richtung 12 länglich ausgedehnten ersten Spulenleiter 125 der Statorlängslagen 710 und die in der zweiten Richtung 14 länglich ausgedehnten zweiten Spulenleiter 126 der Statorschräg- oder -querlagen 711 nicht senkrecht zueinander ausgerichtet sein. Bei der ersten Statoreinheit 100 werden die Statorlängslagen 710 durch die erste Statorlage 104 und durch die vierte Statorlage 107 und die Statorschräg- oder -querlagen 711 durch die zweite Statorlage 105 und die dritte Statorlage 106 gebildet.

Bei der Statoreinheit 100 entspricht eine erste Gesamtzahl von Statorlängslagen 710 einer zweiten Gesamtzahl von Statorschräg- oder -querlagen 711. Insbesondere beträgt bei der Statoreinheit 100 die erste Gesamtzahl zwei und die zweite Gesamtzahl beträgt ebenfalls zwei. Die Statorlängslagen 710 und die Statorschräg- oder -querlagen 711 sind in der dritten Richtung 15 übereinander angeordnet. Außerdem sind die Statorlängslagen 710 und die Statorschräg- oder -querlagen 711 parallel zueinander und senkrecht zu der dritten Richtung 15 ausgerichtet.

Die erste Anordnung der Statorlängslagen 710 und die zweite Anordnung der Statorschräg- oder -querlagen 711 weisen eine gemeinsame Mittenebene 108 auf. Die gemeinsame Mittenebene 108 ist senkrecht zu der dritten Richtung 15 orientiert. Die Mittenebene 108 ist in der dritten Richtung 15 mittig zwischen der in der dritten Richtung 15 obersten Statorlage der ersten Anordnung von Statorlängslagen 710 und der in der dritten Richtung 15 untersten Statorlage der ersten Anordnung von Statorlängslagen 710 angeordnet. Insbesondere ist die Mittenebene 108 mittig zwischen der ersten Statorlage 104 und der vierten Statorlage 107 angeordnet. Außerdem ist die Mittenebene 108 in der dritten Richtung 15 mittig zwischen der obersten Statorlage der zweiten Anordnung von Statorschräg- oder -querlagen 711 und der untersten Statorlage der zweiten Anordnung von Statorschräg- oder -querlagen 711 angeordnet. Insbesondere ist die Mittenebene 108 mittig zwischen der zweiten Statorlage 105 und der dritten Statorlage 106 angeordnet.

Die erste Anordnung von Statorlängslagen 710 und die zweite Anordnung von Statorschräg- oder -querlagen 711 weisen einen gleichen mittleren Abstand 718 von der Statorfläche 11 der Statoreinheit 100 auf. Die Statorfläche 11 ist an der Oberseite der ersten Statorlage 104 angeordnet. Der mittlere Abstand 718 der Statorlängslagen 710 bezeichnet den Mittelwert der Abstände der einzelnen Statorlängslagen 710, also der ersten und vierten Statorlage 104, 107, von der Statorfläche 11. Der mittlere Abstand 718 der Statorschräg- oder -querlagen 711 bezeichnet den Mittelwert der Abstände der einzelnen Statorschräg- oder -querlagen 711, also der zweiten und dritten Statorlage 105, 106, von der Statorfläche 11. Bei der Statoreinheit 100 entspricht der mittlere Abstand 718 der Statorlängslagen 710 der Hälfte des Abstands zwischen den Oberflächen der ersten und vierten Statorlage 104, 107. Der mittlere Abstand der Statorschräg- oder -querlagen 711 entspricht der Hälfte des Abstands zwischen den Oberflächen der zweiten und dritten Statorlage 105, 106.

Die erste Anordnung von Statorlängslagen 710 ist in der dritten Richtung 15 symmetrisch zu der gemeinsamen Mittenebene 108 ausgebildet. Dies bedeutet, dass die Statorlängslagen 710 in der dritten Richtung 15 symmetrisch zu der Mittenebene 108 positioniert oder angeordnet sind. Insbesondere sind die in der dritten Richtung 15 oberhalb der Mittenebene 108 angeordneten Statorlängslagen 710 und die in der dritten Richtung 15 unterhalb der Mittenebene 108 angeordneten Statorlängslagen 710 in der dritten Richtung 15 paarweise einander gegenüberliegend angeordnet.

Die zweite Anordnung von Statorschräg- oder -querlagen 711 ist in der dritten Richtung 15 symmetrisch zu der gemeinsamen Mittenebene 108 ausgebildet. Dies bedeutet, dass die Statorschräg- oder -querlagen 711 in der dritten Richtung 15 symmetrisch zu der Mittenebene 108 positioniert oder angeordnet sind. Insbesondere sind die in der dritten Richtung 15 oberhalb der Mittenebene 108 angeordneten Statorschräg- oder -querlagen 711 und die in der dritten Richtung 15 unterhalb der Mittenebene 108 angeordneten Statorschräg- oder -querlagen 711 in der dritten Richtung 15 paarweise einander gegenüberliegend angeordnet. Bei der Statoreinheit 100 entspricht ein Abstand der gemeinsamen Mittenebene 108 von der Statorfläche 11 dem mittleren Abstand 718 der Statorlängslagen 710 und der Statorschräg- oder -querlagen 711 von der Statorfläche 11.

Während die erste Anordnung von Statorlängslagen 710 und die zweite Anordnung von Statorschräg- oder -querlagen 711 symmetrisch zu der Mittenebene 108 ist, müssen die Statorlängslagen 710 oder die Statorschräg- oder -querlagen 711 selbst nicht auch symmetrisch zu der Mittenebene 108 ausgebildet sein. Insbesondere können einander in der dritten Richtung 15 bezüglich der Mittenebene 108 gegenüberliegende Statorlängslagen 710 oder Statorschräg- oder -querlagen 711 verschieden voneinander ausgebildet sein. Insbesondere können die einander gegenüberliegenden Statorlängslagen 710 oder die einander gegenüberliegenden Statorschräg- oder -querlagen 711 jeweils verschiedene Anordnungen von Spulenleitern 125, 126, Horizontalverbindungsstrukturen und/oder Vertikalverbindungsstrukturen aufweisen.

Die Statoreinheit 100 umfasst eine oberste Statorlage 712 und eine unterste Statorlage 713. Die oberste Statorlage 712 liegt in der dritten Richtung 15 oberhalb aller übrigen Statorlagen 710, 711 und die unterste Statorlage 713 liegt in der dritten Richtung 15 unterhalb aller übrigen Statorlagen 710, 711. Alle übrigen Statorlagen 710, 711 der Statoreinheit 100 sind in der dritten Richtung 15 zwischen der obersten Statorlage 712 und der untersten Statorlage 713 angeordnet, so dass die oberste Statorlage 712 und die unterste Statorlage 713 die Außenlagen der Statoreinheit 100 bilden. Die oberste Statorlage 712 und die unterste Statorlage 713 sind jeweils als Statorlängslagen 710 mit ersten Spulenleitern 125 ausgebildet. Bei der Statoreinheit 100 wird die oberste Statorlage 712 durch die erste Statorlage 104 und die unterste Statorlage 713 durch die vierte Statorlage 107 gebildet. Alle Statorlagen, die zwischen der obersten Statorlage 712 und der untersten Statorlage 713 der Statoreinheit 100 angeordnet sind, insbesondere die zweite und dritte Statorlage 105, 106, bilden Innenlagen 716 der Statoreinheit 100.

Die Statoreinheit 100 umfasst außerdem eine zweitoberste Statorlage 714 und eine zweitunterste Statorlage 715. Die zweitoberste Statorlage 714 ist neben der obersten Statorlage 712 angeordnet und liegt in der dritten Richtung 15 unterhalb der obersten Statorlage 712. Die zweitunterste Statorlage 715 ist neben der untersten Statorlage 713 angeordnet und liegt in der dritten Richtung 15 oberhalb der untersten Statorlage 713. Die zweitoberste Statorlage 714 und die zweitunterste Statorlage 715 sind jeweils als Statorschräg- oder -querlagen 711 mit den zweiten Spulenleitern 126 ausgebildet. Bei der Statoreinheit 100 wird die zweitoberste Statorlage 714 durch die zweite Statorlage 105 und die zweitunterste Statorlage 715 durch die dritte Statorlage 106 gebildet.

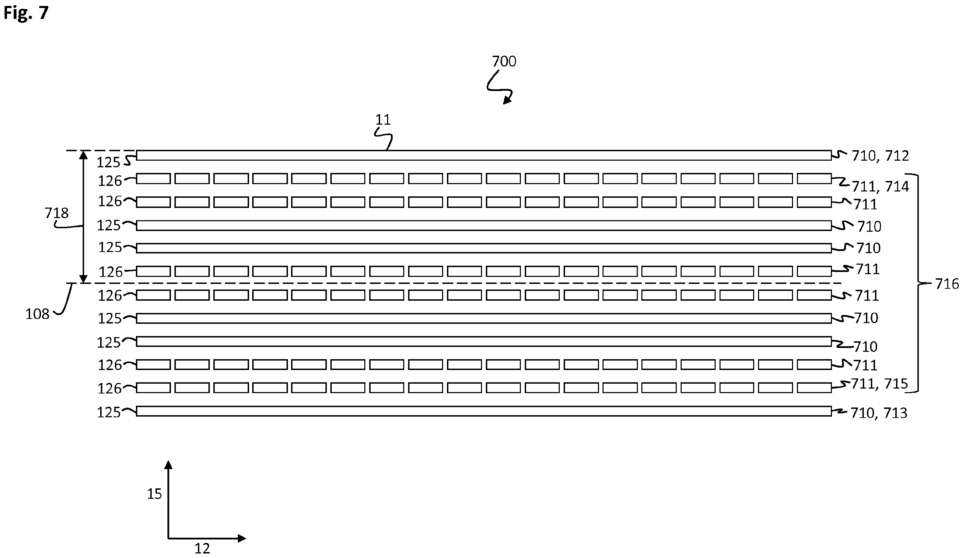

**Fig. 7** zeigt eine schematische, nicht maßstabsgetreue Darstellung einer ersten weiteren Statoreinheit 700 des Statormoduls 10 in einer Schnittansicht, bei der die Schnittebene senkrecht zu der zweiten Richtung 14 orientiert ist. Soweit keine Unterschiede beschrieben werden, ist die erste weitere Statoreinheit 700 ausgebildet, wie es für die Statoreinheit 100 beschrieben wird. Bei der ersten weiteren Statoreinheit 700 ist insbesondere die erste Richtung 12 senkrecht zu der zweiten Richtung 14 orientiert.

Die erste weitere Statoreinheit 700 umfasst insgesamt zwölf Statorlagen. Sechs Statorlagen sind als Statorlängslagen 710 mit ersten Spulenleitern 125 ausgebildet und sechs Statorlagen sind als Statorschräg- oder -querlagen 711 mit zweiten Spulenleitern 126 ausgebildet. Die Statorlängslagen 710 und die Statorschräg- oder -querlagen 711 weisen in der dritten Richtung 15 den gleichen mittleren Abstand 718 von der Statorfläche 11 der ersten weiteren Statoreinheit 700 auf. Die Statorlängslagen 710 und die Statorschräg- oder -querlagen 711 sind in der dritten Richtung 15 symmetrisch zu der gemeinsamen Mittenebene 108 angeordnet. Die oberste Statorlage 712 und die unterste Statorlage 713 sind als Statorlängslagen 710 und die zweitoberste Statorlage 714 und die zweitunterste Statorlage 715 sind als Statorschräg- oder -querlagen 711 ausgebildet.

Die erste weitere Statoreinheit 700 umfasst Innenlagen 716, die im Inneren der ersten weiteren Statoreinheit 700 angeordnet sind. Die Innenlagen 716 sind in der dritten Richtung 15 insbesondere zwischen den Außenlagen der ersten weiteren Statoreinheit 700, also zwischen der obersten und der untersten Statorlage 712, 713, angeordnet. Die Innenlagen 716 sind in der dritten Richtung 15 abwechselnd als jeweils zwei benachbarte Statorlängslagen 710 und als zwei benachbarte Statorschräg- oder -querlagen 711 ausgebildet. Bei der ersten weiteren Statoreinheit 700 sind unter der als Statorlängslage 710 ausgebildeten obersten Statorlage 712 zunächst zwei Statorschräg- oder -querlagen 711, dann zwei Statorlängslagen 710, dann zwei Statorschräg- oder -querlagen 711, dann zwei Statorlängslagen 710 und dann zwei Statorschräg- oder -querlagen 711 als Innenlagen 716 über der als Statorlängslage 710 ausgebildeten untersten Statorlage 713 angeordnet.

Alternative, nicht dargestellte Ausführungsformen der ersten weiteren Statoreinheit 700 können auch weniger als zwölf Statorlagen oder mehr als zwölf Statorlagen umfassen. Insbesondere können alternative, nicht dargestellte Ausführungsformen der ersten weiteren Statoreinheit 700 acht Statorlagen umfassen, wobei zwischen einer als Statorlängslage 710 ausgebildeten obersten Statorlage 712 und einer als Statorlängslage 710 ausgebildeten untersten Statorlage 713 zwei Statorschräg- oder -querlagen 711, zwei Statorlängslagen 710 und zwei Statorschräg- oder -querlagen 711 als Innenlagen 716 angeordnet sein können.

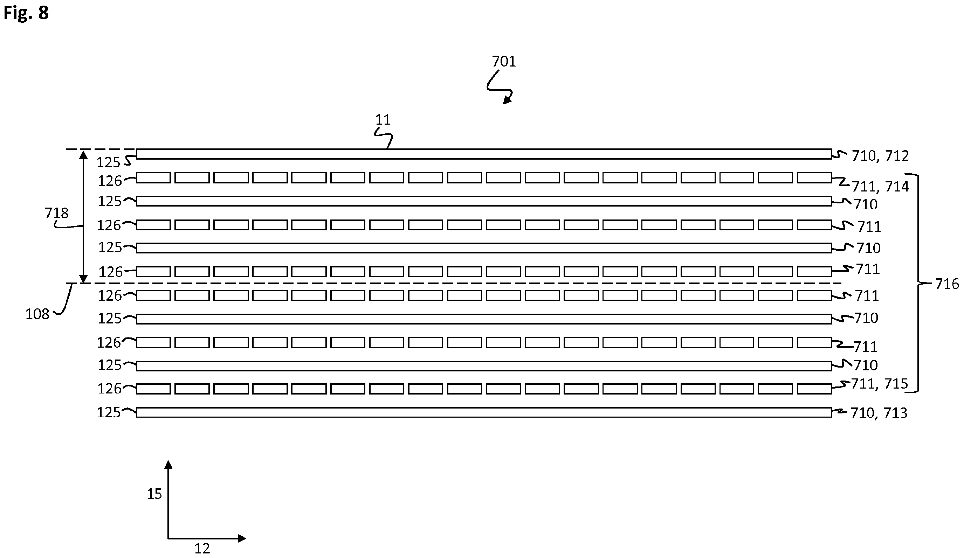

**Fig. 8** zeigt eine schematische Darstellung einer zweiten weiteren Statoreinheit 701 in einer Schnittansicht, bei der die Schnittebene senkrecht zu der zweiten Richtung 14 orientiert ist. Soweit im Folgenden keine Unterschiede beschrieben werden, ist die zweite weitere Statoreinheit 701 ausgebildet, wie es für die erste weitere Statoreinheit 700 beschrieben wird. Das Statormodul 10 kann die zweite weitere Statoreinheit 701 anstelle der Statoreinheit 100 umfassen.

Die zweite weitere Statoreinheit 701 umfasst insgesamt zwölf Statorlagen. Sechs Statorlagen sind als Statorlängslagen 710 mit ersten Spulenleitern 125 ausgebildet und sechs Statorlagen sind als Statorschräg- oder -querlagen 711 mit zweiten Spulenleitern 126 ausgebildet. Die Statorlängslagen 710 und die Statorschräg- oder -querlagen 711 weisen in der dritten Richtung 15 den gleichen mittleren Abstand 718 von der Statorfläche 11 der zweiten weiteren Statoreinheit 701 auf. Die Statorlängslagen 710 und die Statorschräg- oder -querlagen 711 sind in der dritten Richtung 15 symmetrisch zu der gemeinsamen Mittenebene 108 angeordnet. Die oberste Statorlage 712 und die unterste Statorlage 713 sind als Statorlängslagen 710 und die zweitoberste Statorlage 714 und die zweitunterste Statorlage 715 sind als Statorschräg- oder - querlagen 711 ausgebildet.

Bei der zweiten weiteren Statoreinheit 701 sind die zwischen der obersten Statorlage 712 und der Mittenebene 108 angeordneten Innenlagen 716 jeweils abwechselnd als Statorschräg- oder -querlagen 711 und als Statorlängslagen 710 ausgebildet. Außerdem sind die zwischen der Mittenebene 108 und der untersten Statorlage 113 angeordneten Innenlagen 716 jeweils abwechselnd als Statorschräg- oder -querlagen 711 und als Statorlängslagen 710 ausgebildet. Die beiden direkt an die Mittenebene 108 angrenzenden Statorlagen sind jeweils als Statorschräg- oder -querlagen 711 ausgebildet. Bei der zweiten weiteren Statoreinheit 701 sind in der ersten Richtung 15 der Reihe nach eine Statorlängslage 710, eine Statorschräg- oder -querlage 711, eine Statorlängslage 710, eine Statorschräg- oder -querlage 711, eine Statorlängslage 710, eine Statorschräg- oder -querlage 711, eine Statorschräg- oder -querlage 711, eine Statorlängslage 710, eine Statorschräg- oder -querlage 711, eine Statorlängslage 710, eine Statorschräg- oder -querlage 711 und eine Statorlängslage 710 übereinander angeordnet.

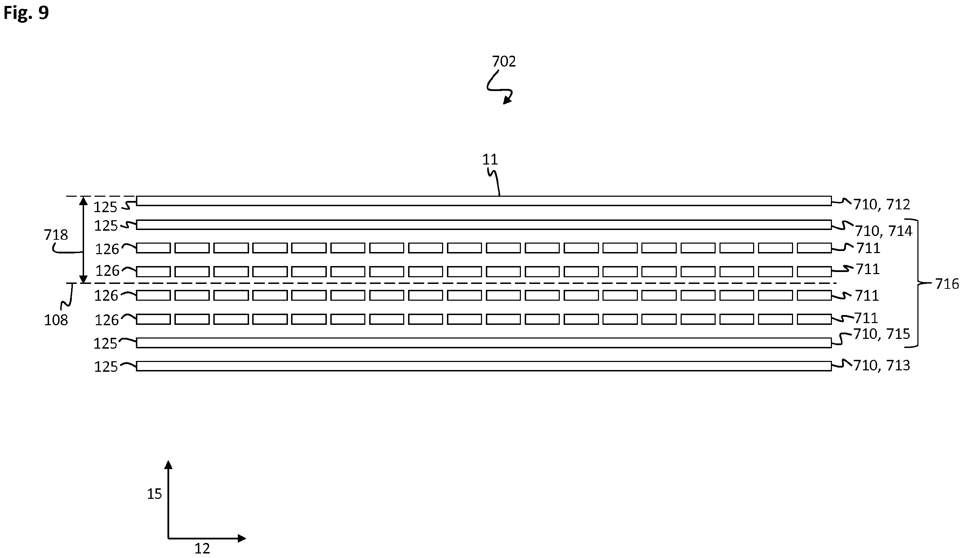

**Fig. 9** zeigt eine schematische, nicht maßstabsgetreue Darstellung einer dritten weiteren Statoreinheit 702 in einer Schnittansicht, bei der die Schnittebene senkrecht zu der zweiten Richtung 14 orientiert ist. Soweit keine Unterschiede beschrieben werden, ist die dritte weitere Statoreinheit 702 ausgebildet, wie es für die erste weitere Statoreinheit 700 beschrieben wird. Das Statormodul 10 kann die dritte weitere Statoreinheit 702 anstelle der Statoreinheit 100 umfassen.

Die dritte weitere Statoreinheit 702 umfasst insgesamt acht Statorlagen. Vier Statorlagen sind als Statorlängslagen 710 mit ersten Spulenleitern 125 ausgebildet und vier Statorlagen sind als Statorschräg- oder -querlagen 711 mit zweiten Spulenleitern 126 ausgebildet. Die Statorlängslagen 710 und die Statorschräg- oder -querlagen 711 weisen in der dritten Richtung 15 den gleichen mittleren Abstand 718 von der Statorfläche 11 der dritten weiteren Statoreinheit 702 auf. Die Statorlängslagen 710 und die Statorschräg- oder -querlagen 711 sind in der dritten Richtung 15 symmetrisch zu der gemeinsamen Mittenebene 108 angeordnet. Die oberste Statorlage 712 und die unterste Statorlage 713 sind als Statorlängslagen 710 ausgebildet.

Bei der dritten weiteren Statoreinheit 702 sind die zweitoberste Statorlage 714 und die zweitunterste Statorlage 715 ebenfalls als Statorlängslagen 710 ausgebildet. Zwischen der zweituntersten Statorlage 715 und der zweitobersten Statorlage 714 sind vier Statorlagen angeordnet, die jeweils als Statorschräg- oder -querlagen 711 ausgebildet sind. Bei der dritten weiteren Statoreinheit 702 sind damit in der dritten Richtung 15 zwei Statorlängslagen 710, vier Statorschräg- oder -querlagen 711 und zwei Statorlängslagen 710 übereinander angeordnet.

Bei der Statoreinheit 100 und der ersten, zweiten und dritten weiteren Statoreinheit 700, 701, 702 sind die beiden an die Mittenebene 108 angrenzenden Statorlagen, also die in der dritten Richtung 15 über der Mittenebene 108 angeordnete Statorlage und die in der dritten Richtung 15 unter der Mittenebene 108 angeordnete Statorlage, jeweils als Statorschräg- oder -querlagen 711 ausgebildet. Bei alternativen Ausführungsformen der Statoreinheiten 100, 700, 701, 702 können die an die Mittenebene 108 angrenzenden Statorlagen auch als Statorlängslagen 710 ausgebildet sein.

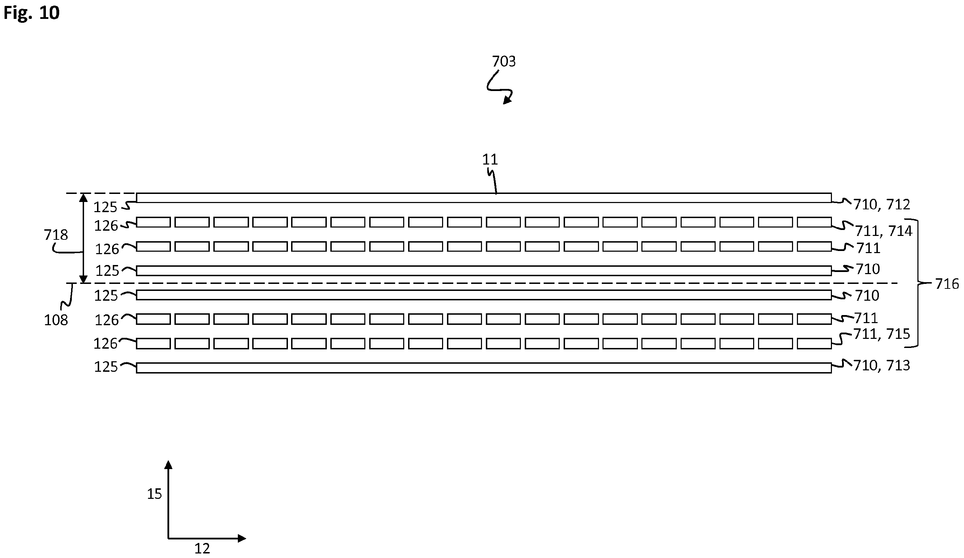

**Fig. 10** zeigt eine schematische, nicht maßstabsgetreue Darstellung einer vierten weiteren Statoreinheit 703 in einer Schnittansicht, bei der die Schnittebene senkrecht zu der zweiten Richtung 14 orientiert ist. Soweit keine Unterschiede beschrieben werden, ist die vierte weitere Statoreinheit 703 ausgebildet, wie es für die erste weitere Statoreinheit 700 beschrieben wird. Das Statormodul 10 kann die vierte weitere Statoreinheit 703 anstelle der Statoreinheit 100 umfassen.

Die vierte weitere Statoreinheit 703 umfasst insgesamt acht Statorlagen. Vier Statorlagen sind als Statorlängslagen 710 mit ersten Spulenleitern 125 ausgebildet und vier Statorlagen sind als Statorschräg- oder -querlagen 711 mit zweiten Spulenleitern 126 ausgebildet. Die Statorlängslagen 710 und die Statorschräg- oder -querlagen 711 weisen in der dritten Richtung 15 den gleichen mittleren Abstand 718 von der Statorfläche 11 der vierten weiteren Statoreinheit 703 auf.

Die Statorlängslagen 710 und die Statorschräg- oder -querlagen 711 sind in der dritten Richtung 15 symmetrisch zu der gemeinsamen Mittenebene 108 angeordnet. Die oberste Statorlage 712 und die unterste Statorlage 713 sind als Statorlängslagen 710 und die zweitoberste Statorlage 714 und die zweitunterste Statorlage 715 sind als Statorschräg- oder -querlagen 711 ausgebildet. Die Innenlagen 716 sind in der dritten Richtung 15 abwechselnd als jeweils zwei benachbarte Statorlängslagen 710 und als zwei benachbarte Statorschräg- oder -querlagen 711 ausgebildet.

Bei der vierten weiteren Statoreinheit 703 sind die an die Mittenebene 108 angrenzenden Statorlagen jeweils als Statorlängslagen 710 ausgebildet. Bei der vierten weiteren Statoreinheit 703 sind in der dritten Richtung 15 der Reihe nach eine Statorlängslage 710, zwei Statorschräg- oder -querlagen 711, zwei Statorlängslagen 710, zwei Statorschräg- oder -querlagen 711 und eine Statorlängslage 710 übereinander angeordnet.

Bei der Statoreinheit 100 und der ersten, zweiten, dritten und vierten Statoreinheit 700, 701, 702, 703 entspricht der Abstand der gemeinsamen Mittenebene 108 von der Statorfläche 11 dem mittleren Abstand 718 der ersten Anordnung von Statorlängslagen 710 und dem mittleren Abstand 718 der zweiten Anordnung von Statorschräg- oder -querlagen 711 von der Statorfläche 11. Bei alternativen Ausführungsformen der Statoreinheiten 100, 700, 701, 702, 703 können der Abstand der Mittenebene 108 von der Statorfläche 11 und der mittlere Abstand 718 der Statorlagen 710, 711 von der Statorfläche 11 auch verschieden sein.

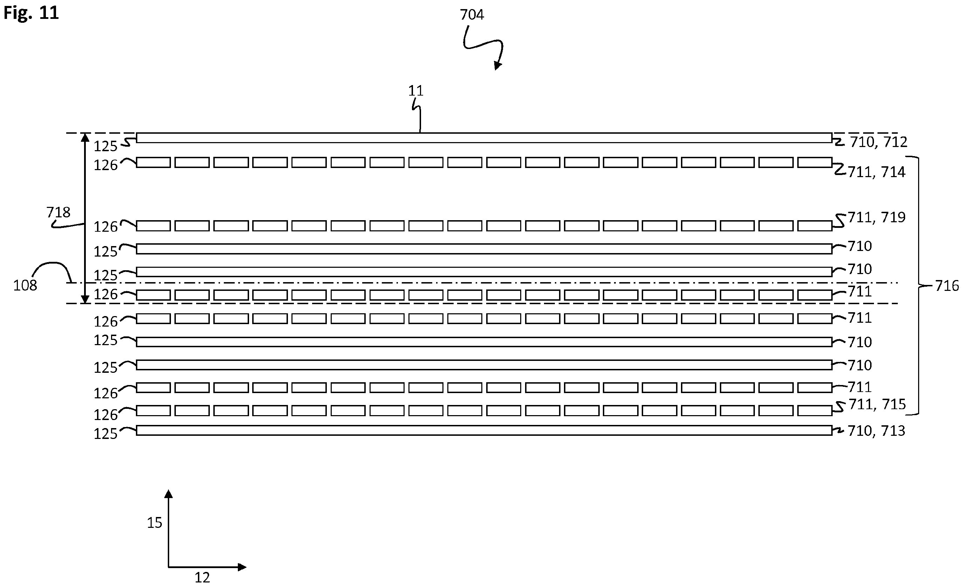

**Fig. 11** zeigt eine schematische, nicht maßstabsgetreue Darstellung einer fünften weiteren Statoreinheit 704 in einer Schnittansicht, bei der die Schnittebene senkrecht zu der zweiten Richtung 14 orientiert ist. Soweit keine Unterschiede beschrieben werden, ist die fünfte weitere Statoreinheit 704 ausgebildet, wie es für die erste weitere Statoreinheit 700 beschrieben wird. Das Statormodul 10 kann die fünfte weitere Statoreinheit 704 anstelle der Statoreinheit 100 umfassen.

Die fünfte weitere Statoreinheit 704 umfasst insgesamt zwölf Statorlagen. Sechs Statorlagen sind als Statorlängslagen 710 mit ersten Spulenleitern 125 ausgebildet und sechs Statorlagen sind als Statorschräg- oder -querlagen 711 mit zweiten Spulenleitern 126 ausgebildet. Die oberste Statorlage 712 und die unterste Statorlage 713 sind als Statorlängslagen 710 und die zweitoberste Statorlage 714 und die zweitunterste Statorlage 715 sind als Statorschräg- oder - querlagen 711 ausgebildet. Die Reihenfolge der Anordnung der Statorlängslagen 710 und der Statorschräg- oder -querlagen 711 in der dritten Richtung 15 entspricht der Reihenfolge der Anordnung der Statorlängslagen 710 und der Statorschräg- oder -querlagen 711 bei der ersten weiteren Statoreinheit 700 gemäß Fig. 7.

Bei der Statoreinheit 100 und der ersten, zweiten, dritten und vierten weiteren Statoreinheit 700, 701, 702, 703 sind alle benachbarten Statorlagen 710, 711 im gleichen Abstand zueinander angeordnet. Bei der fünften weiteren Statoreinheit 704 weist mindestens eine der Statorschräg- oder -querlagen 711 oder mindestens eine der Statorlängslagen 710 einen anderen Abstand von einer benachbarten Statorlage auf, als die übrigen Statorlagen. Insbesondere weist bei der fünften weiteren Statoreinheit 704 die unter der obersten Statorlage 712 angeordnete zweitoberste Statorlage 714 von der nächstunteren Statorlage 719 einen Abstand auf, der verschieden ist von den Abständen zwischen den übrigen Statorlagen. Der Abstand zwischen der zweitobersten Statorlage 714 und der nächstunteren Statorlage 719 kann, wie dargestellt, größer sein als die Abstände der übrigen Statorlagen, er kann aber auch kleiner sein. Bei alternativen, nicht dargestellten Ausführungsformen der fünften weiteren Statoreinheit 704 kann sich auch ein Abstand zwischen zwei anderen benachbarten Statorlagen, als zwischen der zweitobersten Statorlage 714 und der nächstunteren Statorlage 719, von den Abständen der übrigen benachbarten Statorlagen unterscheiden.

Bei der fünften weiteren Statoreinheit 704 weisen die erste Anordnung der Statorlängslagen 710 und die zweite Anordnung der Statorschräg- oder -querlagen 711 eine gemeinsame Mittenebene 108 auf. Insbesondere ist die gemeinsame Mittenebene 108 mittig zwischen der in der dritten Richtung 15 untersten Statorlängslage 710, nämlich der untersten Statorlage 713, und der in der dritten Richtung 15 obersten Statorlängslage 710, nämlich der obersten Statorlage 712, sowie mittig zwischen der in der dritten Richtung 15 untersten Statorschräg- oder -querlage 711, nämlich der zweituntersten Statorlage 715, und der in der dritten Richtung 15 obersten Statorschräg- oder -querlage 711, der zweitobersten Statorlage 714, angeordnet. Bei der fünften weiteren Statoreinheit 704 ist die erste Anordnung der Statorlängslagen 710 unsymmetrisch zu der gemeinsamen Mittenebene 108, insbesondere unsymmetrisch zu der Mittenebene der ersten Anordnung von Statorlängslagen 710, ausgebildet. Außerdem ist die zweite Anordnung der Statorschräg- oder -querlagen 711 unsymmetrisch zu der gemeinsamen Mittenebene 108, insbesondere unsymmetrisch zu der Mittenebene der zweiten Anordnung von Statorschräg- oder -querlagen 711, ausgebildet.

Bei der fünften weiteren Statoreinheit 704 weisen die Statorlängslagen 710 und die Statorschräg- oder -querlagen 711 in der dritten Richtung 15 den gleichen mittleren Abstand 718 von der Statorfläche 11 der fünften weiteren Statoreinheit 704 auf. Der mittlere Abstand 718 ist größer als der Abstand zwischen der Statorfläche 11 und der gemeinsamen Mittenebene 108. Bei alternativen, nicht dargestellten Ausführungsformen der fünften weiteren Statoreinheit 704 kann der mittlere Abstand 718 auch kleiner sein als der Abstand zwischen der Statorfläche 11 und der gemeinsamen Mittenebene 108.

Bei den Statoreinheiten 100, 700, 701, 702, 703, 704 ist eine erste Gesamtzahl von Statorlängslagen 710 und eine zweite Gesamtzahl von Statorschräg- oder -querlagen 711 gleich, die Statoreinheiten 100, 700, 701, 702, 703, 704 weisen also jeweils gleich viele Statorlängslagen 710 und Statorschräg- oder -querlagen 711 auf. Bei alternativen Ausführungsformen der Statoreinheiten 100, 700, 701, 702, 703, 704 können die erste Gesamtzahl und die zweite Gesamtzahl auch verschieden sein und die Statoreinheiten 100, 700, 701, 702, 703, 704 können mehr Statorlängslagen 710 als Statorschräg- oder -querlagen 711 oder umgekehrt umfassen.

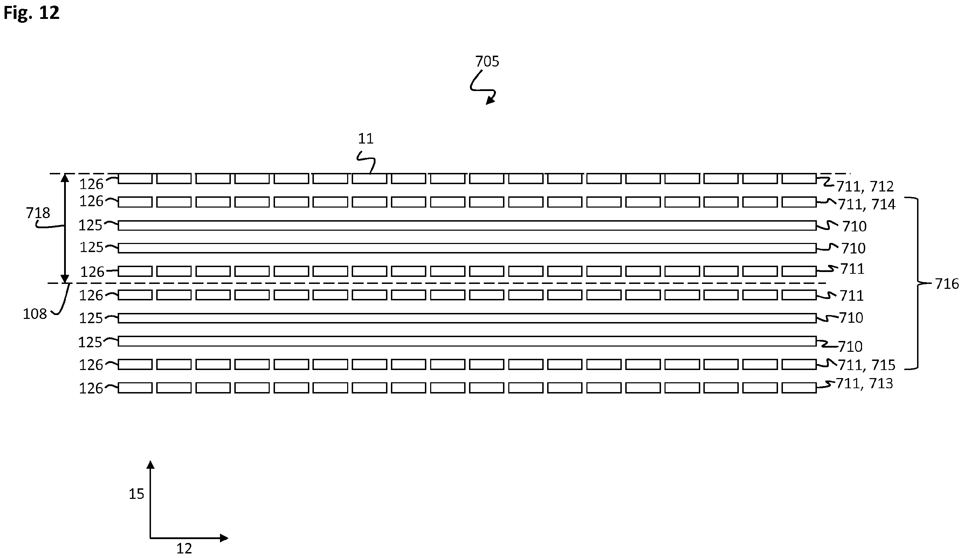

**Fig. 12** zeigt eine schematische Darstellung einer sechsten weiteren Statoreinheit 705 des Statormoduls 10 in einer Schnittansicht, bei der die Schnittebene senkrecht zu der zweiten Richtung 14 orientiert ist. Soweit im Folgenden keine Unterschiede beschrieben werden, ist die sechste weitere Statoreinheit 705 ausgebildet, wie es für die erste weitere Statoreinheit 700 beschrieben wird. Das Statormodul 10 kann die sechste weitere Statoreinheit 705 anstelle der Statoreinheit 100 umfassen.

Die Statorlängslagen 710 und die Statorschräg- oder -querlagen 711 weisen in der dritten Richtung 15 den gleichen mittleren Abstand 718 von der Statorfläche 11 der sechsten weiteren Statoreinheit 705 auf. Die Statorlängslagen 710 und die Statorschräg- oder -querlagen 711 sind in der dritten Richtung 15 symmetrisch zu der gemeinsamen Mittenebene 108 der sechsten weiteren Statoreinheit 705 angeordnet. Bei der sechsten weiteren Statoreinheit 705 sind in der dritten Richtung 15 abwechselnd jeweils zwei Statorschräg- oder -querlagen 711 und zwei Statorlängslagen 710 übereinander angeordnet. Dies schließt bei der sechsten weiteren Statoreinheit 705 sowohl die Außenlagen, als auch die Innenlagen 716 ein. Insbesondere sind bei der sechsten weiteren Statoreinheit 705 sowohl die oberste Statorlage 712 und die unterste Statorlage 713, als auch die zweitoberste Statorlage 714 und die zweitunterste Statorlage 715 als Statorschräg- oder -querlagen 711 ausgebildet.

Bei der sechsten weiteren Statoreinheit 705 sind die erste Gesamtzahl von Statorlängslagen 710 und die zweite Gesamtzahl von Statorschräg- oder -querlagen 711 ungleich, insbesondere ist die erste Gesamtzahl kleiner als die zweite Gesamtzahl. Die sechste weitere Statoreinheit 705 umfasst insgesamt zehn Statorlagen. Sechs Statorlagen sind als Statorschräg- oder -querlagen 711 und vier Statorlagen sind als Statorlängslagen 710 ausgebildet. Bei alternativen, nicht dargestellten Ausführungsformen der sechsten weiteren Statoreinheit 705 kann die erste Gesamtzahl auch größer sein als die zweite Gesamtzahl.

Bei der sechsten weiteren Statoreinheit 705 sind die an die Mittenebene 108 angrenzenden Statorlagen jeweils als Statorschräg- oder -querlagen 711 ausgebildet. Bei der sechsten weiteren Statoreinheit 705 sind in der ersten Richtung 15 der Reihe nach zwei Statorschräg- oder - querlagen 711, zwei Statorlängslagen 710, zwei Statorschräg- oder -querlagen 711, zwei Statorlängslagen 710 und zwei Statorschräg- oder -querlagen 711 übereinander angeordnet.

Die Statorlagen weisen bei der sechsten weiteren Statoreinheit 705 jeweils alle den gleichen Abstand voneinander auf. Die gemeinsame Mittenebene 108 ist mittig zwischen der obersten Statorlage 712 und der untersten Statorlage 713 angeordnet. Der Abstand der gemeinsamen Mittenebene 108 von der Statorfläche 11 entspricht damit auch dem mittleren Abstand 718 der Statorlängslagen 710 und der Statorschräg- oder -querlagen 711 von der Statorfläche 11.

Die Statoreinheiten 100, 700, 701, 702, 703, 704, 705 können mehrere, übereinander angeordnete zweilagige Leiterplatten umfassen. Die zweilagigen Leiterplatten können jeweils eine erste und eine zweite Leiterbahnlage umfassen, die an einer ersten Seite und an einer zweiten Seite der Leiterplatte angeordnet sind und zwischen denen eine isolierende Zwischenschicht angeordnet ist. Die erste Leiterbahnlage kann über Durchkontaktierungen, welche durch die isolierende Zwischenschicht führen, mit der zweiten Leiterbahnlage elektrisch leitend verbunden sein. Die Durchkontaktierungen können beispielsweise als leitfähig beschichtete Durchgangsöffnungen in der Zwischenschicht ausgebildet sein. Die Durchkontaktierungen können sich dabei jeweils nur über diejenige Leiterplatte erstrecken, auf der die über die betreffende Durchkontaktierung verbundenen Leiterbahnlagen angeordnet sind, nicht jedoch über die gesamte Statoreinheit 100, 700, 701, 702, 703, 704, 705. Derartige Durchkontaktierungen einer aus mehreren zweilagigen Leiterplatten aufgebauten Leiterplatte werden auch als *buried vias* bezeichnet.

Die zweilagigen Leiterplatten können übereinander angeordnet und miteinander verklebt oder verpresst sein, so dass die Statoreinheit 100, 700, 701, 702, 703, 704, 705 insgesamt eine mehrlagige Leiterplatte mit einer geraden Anzahl von Leiterbahnlagen umfasst.

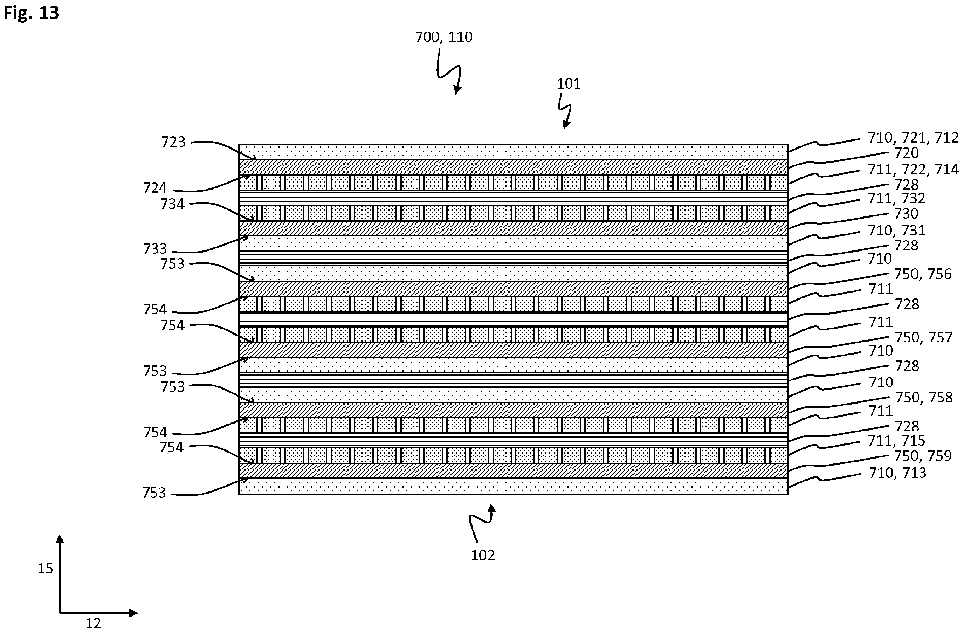

**Fig. 13** zeigt eine weitere schematische, nicht maßstabsgetreue Darstellung der ersten weiteren Statoreinheit 700 in einer Schnittansicht, wobei die Schnittebene senkrecht zu der zweiten Richtung 14 orientiert ist.

Die erste weitere Statoreinheit 700 weist eine erste Trägerplatte 720 und eine zweite Trägerplatte 730 auf. Soweit keine Unterschiede beschrieben werden, ist die zweite Trägerplatte 730 ausgebildet, wie es für die erste Trägerplatte 720 beschrieben wird.

Die erste Trägerplatte 720 ist in der ersten Richtung 12 und in der zweiten Richtung 14 plattenförmig, insbesondere als eine in der ersten und zweiten Richtung 12, 14 ausgedehnte Platte, ausgebildet. Die erste Trägerplatte 720 ist in der ersten Richtung 12 und in der zweiten Richtung 14 ausgedehnt und weist in der dritten Richtung 15 eine geringere Ausdehnung auf als in der ersten Richtung 12 und in der zweiten Richtung 14. Die erste Trägerplatte 720 erstreckt sich in der ersten Richtung 12 zwischen den entlang der zweiten Richtung 14 orientierten Seitenflächen 32 der ersten weiteren Statoreinheit 700. In der zweiten Richtung 14 erstreckt sich die erste Trägerplatte 720 zwischen den entlang der ersten Richtung 12 orientierten Seitenflächen 32 der ersten weiteren Statoreinheit 700.

Die erste Trägerplatte 720 ist zweilagig ausgebildet, umfasst also zwei Statorlagen der ersten weiteren Statoreinheit 700. Die erste Trägerplatte 720 weist eine erste Seite 723 und eine der ersten Seite 723 in der dritten Richtung 15 gegenüberliegende zweite Seite 724 auf. Auf der ersten Seite 723 der ersten Trägerplatte 720 ist eine als erste Statorlängslage 721 bezeichnete Statorlängslage 710 der ersten weiteren Statoreinheit 700 mit ersten Spulenleitern 125 angeordnet. Auf der zweiten Seite 724 der ersten Trägerplatte 720 ist eine als erste Statorschräg- oder -querlage 722 bezeichnete Statorschräg- oder -querlage 711 der ersten weiteren Statoreinheit 700 mit zweiten Spulenleitern 126 angeordnet. Die erste Seite 723 der ersten Trägerplatte 720 und die zweite Seite 724 der erste Trägerplatte 720 sind jeweils eben ausgebildet und parallel zueinander angeordnet.

Die erste Trägerplatte 720 umfasst ein elektrisch isolierendes Material, beispielsweise eine Keramik, einen Kunststoff oder einen glasfaserverstärkten Kunststoff. Die erste Statorlängslage 721 mit den ersten Spulenleitern 125 und die erste Statorschräg- oder -querlage 722 mit den zweiten Spulenleitern 126 sind als in der dritten Richtung 15 flache und elektrisch leitfähige Schichten, beispielsweise metallische Schichten, ausgebildet.

Die erste Trägerplatte 720 kann als eine Leiterplatte, insbesondere als eine gedruckte Leiterplatte *(printed circuit board),* und die erste Statorlängslage 721 und die erste Statorschräg- oder -querlage 722 können als Leiterbahnlagen der Leiterplatte ausgebildet sein. Die ersten Spulenleiter 125 der ersten Statorlängslage 721 und die zweiten Spulenleiter 126 der ersten Statorschräg- oder -querlage 722 können auf den Seiten 723, 724 oder Lagen der ersten Trägerplatte 720 als länglich ausgedehnte Leiterstreifen mit einer Dicke zwischen 10µm und 500µm ausgebildet sein, insbesondere können die Leiterstreifen eine Dicke zwischen 50µm und 250µm aufweisen. Die ersten Spulenleiter 125 der ersten Statorlängslage 721 und die zweiten Spulenleiter 126 der zweiten Statorschräg- oder -querlage 722 können auch als Metallstreifen oder Metalldrähte ausgebildet sein.

Die zweite Trägerplatte 730 ist ausgebildet, wie es für die erste Trägerplatte 720 beschrieben wird. Insbesondere weist die zweite Trägerplatte 730 eine erste Seite 733 und eine der ersten Seite 733 der zweiten Trägerplatte 730 in der dritten Richtung 15 gegenüberliegende zweite Seite 734 auf. Auf der ersten Seite 733 der zweiten Trägerplatte 730 ist eine als zweite Statorlängslage 731 bezeichnete Statorlängslage 710 mit ersten Spulenleitern 125 und auf der zweiten Seite 734 der zweiten Trägerplatte 733 ist eine als zweite Statorschräg- oder -querlage 732 bezeichnete Statorschräg- oder -querlage 711 mit zweiten Spulenleitern 126 angeordnet. Analog zu der ersten Trägerplatte 720 kann die zweite Trägerplatte 730 als eine Leiterplatte, insbesondere als eine gedruckte Leiterplatte *(printed circuit board),* und die zweite Statorlängslage 731 und die erste Statorschräg- oder -querlage 732 können als Leiterbahnlagen der Leiterplatte ausgebildet sein.

Die erste Trägerplatte 720 ist derart ausgerichtet, dass die erste Seite 723 der ersten Trägerplatte 720 in der dritten Richtung 15 über der zweiten Seite 724 der ersten Trägerplatte 720 liegt. Damit bildet die erste Seite 723 der ersten Trägerplatte 720 in der dritten Richtung 15 die Oberseite der ersten Trägerplatte 720 und die zweite Seite 724 der ersten Trägerplatte 720 bildet in der dritten Richtung 15 die Unterseite der ersten Trägerplatte 720. Die zweite Trägerplatte 730 ist derart ausgerichtet, dass die erste Seite 733 der zweiten Trägerplatte 730 in der dritten Richtung 15 unter der zweiten Seite 734 der zweiten Trägerplatte 730 liegt. Damit bildet die erste Seite 733 der zweiten Trägerplatte 730 in der dritten Richtung 15 die Unterseite der zweiten Trägerplatte 730 und die zweite Seite 734 der zweiten Trägerplatte 730 bildet in der dritten Richtung 15 die Oberseite der zweiten Trägerplatte 730.

Die erste Trägerplatte 720 und die zweite Trägerplatte 730 der ersten weiteren Statoreinheit 700 sind in der dritten Richtung 15 nebeneinander angeordnet. Die erste Trägerplatte 720 und die zweite Trägerplatte 730 sind parallel zueinander ausgerichtet. Die erste Trägerplatte 720 ist in der dritten Richtung 15 über der zweiten Trägerplatte 730 angeordnet. Insbesondere ist die zweite Seite 724 der ersten Trägerplatte 720 der zweiten Seite 734 der zweiten Trägerplatte 730 zugewandt angeordnet. Die erste Seite 723 der ersten Trägerplatte 720 bildet in der dritten Richtung 15 eine Oberseite 101 der ersten weiteren Statoreinheit 700.

Bei der ersten weiteren Statoreinheit 700 bildet die erste Statorlängslage 721 die erste Statorlage 104 der ersten weiteren Statoreinheit 700. Die erste Statorschräg- oder -querlage 722 bildet die zweite Statorlage 105, die zweite Statorschräg- oder -querlage 732 bildet die dritte Statorlage 106 und die zweite Statorlängslage 731 bildet die vierte Statorlage 107 der ersten weiteren Statoreinheit 700.

Zwischen der ersten Trägerplatte 720 und der zweiten Trägerplatte 730 ist eine Isolierlage 728 angeordnet. Die Isolierlage 728 ist elektrisch isolierend ausgebildet. Die Isolierlage 728 kann beispielsweise einen Kunststoff oder eine Keramik aufweisen. Die Isolierlage 728 kann sich in der ersten Richtung 12 zwischen den entlang der zweiten Richtung 14 verlaufenden Seitenflächen 32 der ersten weiteren Statoreinheit 700 und in der zweiten Richtung 14 zwischen den entlang der ersten Richtung 12 verlaufenden Seitenflächen 32 der ersten weiteren Statoreinheit 700 erstrecken. Die Isolierlage 728 und die Trägerplatten 720, 730 können in der dritten Richtung 15 eine gleiche Dicke aufweisen. Die Dicke der Trägerplatten 720, 730 und der Isolierlage 728 kann in der dritten Richtung 15 beispielsweise zwischen 35µm und 200µm, insbesondere zwischen 50µm und 100µm, insbesondere 75µm betragen. Die Isolierlage 728 kann in der dritten Richtung 15 aber auch eine geringere oder eine größere Dicke als die Trägerplatten 720, 730 aufweisen.

Die Isolierlage 728 ist mit der ersten Trägerplatte 720 und mit der zweiten Trägerplatte 730 mechanisch fest verbunden. Beispielsweise kann die Isolierlage 728 mit den Trägerplatten 720, 730 verklebt sein. Alternativ oder zusätzlich kann in der dritten Richtung 15 ein Verbindungselement durch die ersten weiteren Statoreinheit 700 verlaufen und die Trägerplatten 720, 730 und die Isolierlage 728 mechanisch miteinander verbinden. Das Verbindungselement kann beispielsweise von der Oberseite 101 der ersten weiteren Statoreinheit 700 bis zu der Unterseite 102 der Statoreinheit 100 verlaufen. Das Verbindungselement kann beispielsweise von der ersten Seite 723 der ersten Trägerplatte 720 bis zu der ersten Seite 733 der zweiten Trägerplatte 730 verlaufen. Das Verbindungselement kann beispielsweise als ein Einpressverbinder ausgebildet sein. Neben dem Verbindungselement kann die ersten weiteren Statoreinheit 700 weitere, identisch ausgebildete Verbindungselemente aufweisen.

Die erste weitere Statoreinheit 700 umfasst neben der ersten und der zweiten Trägerplatte 720, 730 noch vier weitere Trägerplatten 750. Soweit keine Unterschiede beschrieben werden, sind die weiteren Trägerplatten 750 ausgebildet und angeordnet, wie es für die erste und zweite Trägerplatte 720, 730 beschrieben wird. Insbesondere weisen die weiteren Trägerplatten 750 jeweils eine erste Seite 753 mit einer Statorlängslage 710 und eine zweite Seite 754 mit einer Statorschräg- oder -querlage 711 auf. Die Trägerplatten 720, 730, 750 der ersten weiteren Statoreinheit 700 sind in der dritten Richtung 15 übereinander und parallel zueinander ausgerichtet angeordnet. Dabei sind in der dritten Richtung 15 jeweils abwechselnd die ersten Seiten 723, 733, 753 und die zweiten Seiten 724, 734, 754 nebeneinander angeordneter Trägerplatten 720, 730, 750 einander zugewandt angeordnet.

Bei der ersten weiteren Statoreinheit 700 ist die erste Trägerplatte 720 als oberste Trägerplatte in der dritten Richtung 15 über allen übrigen Trägerplatten 730, 750 angeordnet. Die erste Statorlängslage 721 bildet die oberste Statorlage 712 und die erste Statorschräg- oder -querlage 722 bildet die zweitoberste Statorlage 714 der ersten weiteren Statoreinheit 700. Die erste Seite 723 der ersten Trägerplatte 720 bildet eine Oberseite 101 der ersten weiteren Statoreinheit 700.

In der dritten Richtung 15 unter der ersten Trägerplatte 720 sind der Reihe nach die zweite Trägerplatte 730, eine erste weitere Trägerplatte 756, eine zweite weitere Trägerplatte 757, eine dritte weitere Trägerplatte 758 und eine vierte weitere Trägerplatte 759 angeordnet. Die erste Seite 733 der zweiten Trägerplatte 730 ist der ersten Seite 753 der ersten weiteren Trägerplatte 756, die zweite Seite 754 der ersten weiteren Trägerplatte 756 ist der zweiten Seite 754 der zweiten weiteren Trägerplatte 757, die erste Seite 753 der zweiten weiteren Trägerplatte 757 ist der ersten Seite 753 der dritten weiteren Trägerplatte 758 und die zweite Seite 754 der dritten weiteren Trägerplatte 758 ist der zweiten Seite 754 der vierten weiteren Trägerplatte 759 zugewandt angeordnet. Die erste Seite 753 der vierten weiteren Trägerplatte 759 bildet die Unterseite 102 der ersten weiteren Statoreinheit 700.

Zwischen den Trägerplatten 720, 730, 750 ist jeweils eine Isolierlage 728 angeordnet, die ausgebildet ist, wie die zwischen der ersten und zweiten Trägerplatte 720, 730 angeordnete Isolierlage 728.

Die erste weitere Statoreinheit 700 umfasst insgesamt eine mehrlagige Statorlagenanordnung mit einer geraden Anzahl von Statorlagen. Die erste weitere Statoreinheit 700 umfasst insbesondere eine zwölflagige Statorlagenanordnung. Die erste weitere Statoreinheit 700 umfasst mehrere in der dritten Richtung 15 übereinander angeordnete zweilagige Trägerplatten 720, 730, 750. Insbesondere umfasst die erste weitere Statoreinheit 700 sechs in der dritten Richtung 15 übereinander angeordnete zweilagige Trägerplatten 720, 730, 750.

Bei der ersten weiteren Statoreinheit 700 ist im Inneren der Statoreinheit 700, also abgesehen von der obersten Statorlage 712 und der untersten Statorlage 713, in der dritten Richtung 15 neben jeder Statorlängslage 710 eine Statorschräg- oder -querlage 711 und neben jeder Statorschräg- oder -querlage 711 eine Statorlängslage 710 angeordnet. Dabei ist jede Statorlängslage 710 auf der ersten Seite 723, 733, 753 und jede benachbart angeordnete Statorschräg- oder -querlage 711 auf der zweiten Seite 724, 734, 754 der jeweils zweilagigen Trägerplatten 720, 730, 750 angeordnet. Insbesondere umfasst die erste weitere Statoreinheit 700 jeweils ausschließlich zweilagige Trägerplatten 720, 730, 750 auf deren erster Seite 723, 733, 753 eine Statorlängslage 710 und auf deren zweiter Seite 724, 734, 754 eine Statorschräg- oder -querlage 711 angeordnet ist.

Bei der Statoreinheit 100, der ersten weiteren Statoreinheit 700, der zweiten weiteren Statoreinheit 701, der vierten weiteren Statoreinheit 703 und der fünften weiteren Statoreinheit 704 ist in der dritten Richtung 15 neben jeder Statorlängslage 710 mindestens eine Statorschräg- oder - querlage 711 angeordnet. Dabei kann jede Statorlängslage 710 als die erste Leiterbahnlage und die benachbart angeordnete Statorschräg- oder -querlage 711 als die zweite Leiterbahnlage einer zweilagigen Leiterplatte ausgebildet sein. Insbesondere können die Statoreinheit 100 und die erste, zweite, vierte und fünfte weitere Statoreinheit 700, 701, 703, 704 jeweils ausschließlich zweilagige Leiterplatten umfassen, deren erste Leiterbahnlage als Statorlängslage 710 und deren zweite Leiterbahnlage als Statorschräg- oder -querlage 711 ausgebildet ist. Die Statorlängslagen 710 und die Statorschräg- oder -querlagen 711 der einzelnen Leiterplatten können dann jeweils mittels ausschließlich auf der betreffenden Leiterplatte, beispielsweise als *buried vias,* ausgeführten Durchkontaktierungen elektrisch leitend miteinander verbunden sein.

Bei den Statoreinheiten 100, 700, 701, 702, 703, 704, 705 sind die ersten Spulenleiter 125 als in der ersten Richtung 12 länglich ausgedehnte und in der zweiten Richtung 14 nebeneinander angeordnete erste Leiterstreifen ausgebildet. Außerdem sind die zweiten Spulenleiter 126 als in der zweiten Richtung 14 länglich ausgedehnte und in der ersten Richtung 12 nebeneinander angeordnete zweite Leiterstreifen ausgebildet. Bei alternativen, nicht dargestellten Ausführungsformen der Statoreinheiten 100, 700, 701, 702, 703, 704, 705 können die ersten Spulenleiter 125 und/oder die zweiten Spulenleiter 126 auch als Drähte oder gewickelte Spulen ausgebildet sein. Derart ausgebildete erste Spulenleiter 125 können, analog zu den als Leiterstreifen ausgebildeten ersten Spulenleitern 125, ebenfalls in der ersten Richtung 12 länglich ausgedehnt und in der zweiten Richtung 14 nebeneinander angeordnet sein. Ebenso können derart ausgebildete zweite Spulenleiter 126, analog zu den als Leiterstreifen ausgebildeten zweiten Spulenleitern 126, in der zweiten Richtung 14 länglich ausgedehnt und in der ersten Richtung 12 nebeneinander angeordnet sein.

Im Sinne der vorliegenden Erfindung bezeichnet der Begriff Statoreinheit lediglich die Anordnung der Statorlängslagen 710 und der Statorschräg- oder -querlagen 711 in der dritten Richtung 15 und impliziert nicht, dass die Statorlängslagen 710 und/oder die Statorschräg- oder - querlagen 711 notwendigerweise mechanisch miteinander verbunden sein müssen. Dies kann jedoch, wie bei den als Leiterplatten, insbesondere als gedruckte Leiterplatten, ausbildeten Statoreinheiten 100, 700, 701, 702, 703, 704, 705, der Fall sein. Alternativ können die Statorlängslagen 710 und/oder die Statorschräg- oder -querlagen 711 beispielsweise auch als separate, in der dritten Richtung 15 übereinander angeordnete Platten ausgebildet und über Verbindungsmittel miteinander verbunden sein.

### Bezugszeichenliste

- 1: Planarantriebssystem
- 8: Oberseite
- 9: Unterseite
- 10: Statormodul
- 11: Statorfläche
- 12: erste Richtung
- 14: zweite Richtung
- 15: dritte Richtung
- 18: Anschlussleitung
- 19: Modulgehäuse
- 30: Außenkante der Statorfläche
- 32: Seitenfläche der Statoreinheit
- 34: Seitenfläche des Modulgehäuses
- 36: Seitenfläche des Statormoduls
- 100: Statoreinheit
- 101: Oberseite
- 102: Unterseite
- 104: erste Statorlage
- 105: zweite Statorlage
- 106: dritte Statorlage
- 107: vierte Statorlage
- 108: Mittenebene
- 110: erster Statorsektor
- 112: zweiter Statorsektor
- 113: dritter Statorsektor
- 114: vierter Statorsektor
- 120: erste Statorsegmente
- 121: zweite Statorsegmente
- 125: erste Spulenleiter
- 126: zweite Spulenleiter
- 200: Läufer
- 201: Magnetanordnung
- 206: erste Läuferrichtung
- 208: zweite Läuferrichtung
- 210: erste Magneteinheit
- 211: erster Antriebsmagnet
- 220: zweite Magneteinheit
- 221: zweiter Antriebsmagnet
- 230: dritte Magneteinheit
- 240: vierte Magneteinheit
- 700: erste weitere Statoreinheit
- 701: zweite weitere Statoreinheit
- 702: dritte weitere Statoreinheit
- 703: vierte weitere Statoreinheit
- 704: fünfte weitere Statoreinheit
- 705: sechste weitere Statoreinheit
- 710: Statorlängslage
- 711: Statorquerlage
- 712: oberste Statorlage
- 713: unterste Statorlage
- 714: zweitoberste Statorlage
- 715: zweitunterste Statorlage
- 716: Innenlagen
- 718: mittlerer Abstand
- 719: nächstuntere Statorlage
- 720: erste Trägerplatte
- 721: erste Statorlängslage
- 722: erste Statorschräglage
- 723: erste Seite der ersten Trägerplatte
- 724: zweite Seite der ersten Trägerplatte
- 728: Isolierlage
- 730: zweite Trägerplatte
- 731: zweite Statorlängslage
- 732: zweite Statorschräglage
- 733: erste Seite der zweiten Trägerplatte
- 734: zweite Seite der zweiten Trägerplatte
- 750: weitere Trägerplatte
- 753: erste Seite der weiteren Trägerplatte
- 754: zweite Seite der weiteren Trägerplatte
- 756: erste weitere Trägerplatte
- 757: zweite weitere Trägerplatte
- 758: dritte weitere Trägerplatte
- 759: vierte weitere Trägerplatte

## Patentansprüche

1. Statoreinheit (100, 700, 701, 702, 703, 704, 705) zum Antreiben eines Läufers (200) eines elektrischen Planarmotors (1),
wobei die Statoreinheit (100, 700, 701, 702, 703, 704, 705) eine erste Anordnung von Statorlängslagen (710) und eine zweite Anordnung von Statorschräg- oder -querlagen (711) umfasst,
wobei die Statorlängslagen (710) erste Spulenleiter (125) umfassen und wobei die Statorschräg- oder -querlagen (711) zweite Spulenleiter (126) umfassen,
wobei die zweiten Spulenleiter (126) dazu ausgebildet sind, mit zweiten Antriebsmagneten (221) des Läufers (200) wechselzuwirken, um den Läufer (200) in einer ersten Richtung (12) anzutreiben,
wobei die ersten Spulenleiter (125) dazu ausgebildet sind, mit ersten Antriebsmagneten (211) des Läufers (200) wechselzuwirken, um den Läufer (200) in einer von der ersten Richtung (12) verschiedenen zweiten Richtung (14) anzutreiben,
wobei die Statorlängslagen (710) und die Statorschräg- oder -querlagen (711) in einer zu der ersten und zweiten Richtung (12, 14) senkrecht orientierten dritten Richtung (15) übereinander angeordnet sind,
**dadurch gekennzeichnet, dass**
die Statorlängslagen (710) und die Statorschräg- oder -querlagen (711) in der dritten Richtung (15) den gleichen mittleren Abstand (718) von einer Statorfläche (11) der Statoreinheit (100, 700, 701, 702, 703, 704, 705) aufweisen, wobei die Statorfläche (11) die dem Läufer (200) zugewandte ebene Oberfläche der Statoreinheit (100, 700, 701, 702, 703, 704, 705) ist.

2. Statoreinheit (100, 700, 701, 702, 703, 704, 705) nach Anspruch 1,
wobei die erste Anordnung von Statorlängslagen (710) und die zweite Anordnung von Statorschräg- oder -querlagen (711) eine gemeinsame Mittenebene (108) aufweisen, wobei die Statorlängslagen (710) und die Statorschräg- oder -querlagen (711) in der dritten Richtung 15 jeweils symmetrisch zu der gemeinsamen Mittenebene (108) angeordnet sind.

3. Statoreinheit (100, 700, 701, 702, 703, 704, 705) nach einem der vorhergehenden Ansprüche,
wobei eine erste Gesamtzahl von Statorlängslagen (710) und eine zweite Gesamtzahl von Statorschräg- oder -querlagen (711) gleich sind.

4. Statoreinheit (100, 700, 701, 702, 703, 704, 705) nach einem der vorhergehenden Ansprüche,
wobei die erste Anordnung sechs Statorlängslagen (710) und die zweite Anordnung sechs Statorschräg- oder -querlagen (711) umfasst.

5. Statoreinheit (100, 700, 701, 702, 703, 704, 705) nach einem der vorhergehenden Ansprüche,
wobei eine oberste Statorlage (712) der Statoreinheit (100, 700, 701, 702, 703, 704, 705) und eine unterste Statorlage (713) der Statoreinheit (100, 700, 701, 702, 703, 704, 705) jeweils als Statorlängslage (710) mit ersten Spulenleitern (125) ausgebildet ist, wobei eine zweitoberste Statorlage (714) der Statoreinheit (100, 700, 701, 702, 703, 704, 705) und eine zweitunterste Statorlage (715) der Statoreinheit (100, 700, 701, 702, 703, 704, 705) jeweils als Statorschräg- oder -querlagen (711) mit zweiten Spulenleitern (126) ausgebildet ist.

6. Statoreinheit (100, 700, 701, 702, 703, 704, 705) nach einem der vorhergehenden Ansprüche,
wobei die Statoreinheit (100, 700, 701, 702, 703, 704, 705) im Inneren der Statoreinheit (100, 700, 701, 702, 703, 704, 705) angeordnete Innenlagen (716) aufweist,
wobei die Innenlagen (716) der Statoreinheit (100, 700, 701, 702, 703, 704, 705) jeweils abwechselnd als zwei benachbarte Statorschräg- oder -querlagen (711) und als zwei benachbarte Statorlängslagen (710) ausgebildet sind.

7. Statoreinheit (100, 700, 701, 702, 703, 704, 705) nach einem der vorhergehenden Ansprüche,
wobei die ersten Spulenleiter (125) als entlang der ersten Richtung (12) länglich ausgedehnte Leiterstreifen ausgebildet sind und wobei die zweiten Spulenleiter (126) als entlang der zweiten Richtung (14) länglich ausgedehnte Leiterstreifen ausgebildet sind.

8. Statoreinheit (100, 700, 701, 702, 703, 704, 705) nach einem der vorhergehenden Ansprüche,
wobei die Statoreinheit (100, 700, 701, 702, 703, 704, 705) als eine mehrlagige Leiterplatte ausgebildet ist.

9. Statormodul (10) mit einer Statoreinheit (100, 700, 701, 702, 703, 704, 705) nach einem der Ansprüche 1 bis 8.

## Claims

1. Stator unit (100, 700, 701, 702, 703, 704, 705) for driving a rotor (200) of an electrical planar motor (1), wherein the stator unit (100, 700, 701, 702, 703, 704, 705) comprises a first arrangement of stator longitudinal layers (710) and a second arrangement of stator oblique or transverse layers (711),
wherein the stator longitudinal layers (710) comprise first coil conductors (125), and wherein the stator oblique or transverse layers (711) comprise second coil conductors (126),
wherein the second coil conductors (126) are configured to interact with second drive magnets (221) of the rotor (200) in order to drive the rotor (200) in a first direction (12),
wherein the first coil conductors (125) are configured to interact with first drive magnets (211) of the rotor (200) in order to drive the rotor (200) in a second direction (14) different from the first direction (12), wherein the stator longitudinal layers (710) and the stator oblique or transverse layers (711) are arranged one above another in a third direction (15) oriented perpendicularly to the first and second directions (12, 14),
**characterized in that** the stator longitudinal layers (710) and the stator oblique or transverse layers (711) in the third direction (15) are at the same average distance (718) from a stator surface (11) of the stator unit (100, 700, 701, 702, 703, 704, 705), wherein the stator surface (11) is the flat surface of the stator unit (100, 700, 701, 702, 703, 704, 705) that faces the rotor (200).

2. Stator unit (100, 700, 701, 702, 703, 704, 705) according to Claim 1,
wherein the first arrangement of stator longitudinal layers (710) and the second arrangement of stator oblique or transverse layers (711) have a common centre plane (108),
wherein the stator longitudinal layers (710) and the stator oblique or transverse layers (711) in the third direction (15) are each arranged symmetrically with respect to the common centre plane (108).

3. Stator unit (100, 700, 701, 702, 703, 704, 705) according to either of the preceding claims,
wherein a first total number of stator longitudinal layers (710) and a second total number of stator oblique or transverse layers (711) are identical.

4. Stator unit (100, 700, 701, 702, 703, 704, 705) according to one of the preceding claims,
wherein the first arrangement comprises six stator longitudinal layers (710) and the second arrangement comprises six stator oblique or transverse layers (711).

5. Stator unit (100, 700, 701, 702, 703, 704, 705) according to one of the preceding claims,
wherein an uppermost stator layer (712) of the stator unit (100, 700, 701, 702, 703, 704, 705) and a lowermost stator layer (713) of the stator unit (100, 700, 701, 702, 703, 704, 705) are each formed as a stator longitudinal layer (710) with first coil conductors (125),
wherein a second uppermost stator layer (714) of the stator unit (100, 700, 701, 702, 703, 704, 705) and a second lowermost stator layer (715) of the stator unit (100, 700, 701, 702, 703, 704, 705) are each formed as stator oblique or transverse layers (711) with second coil conductors (126).

6. Stator unit (100, 700, 701, 702, 703, 704, 705) according to one of the preceding claims,
wherein the stator unit (100, 700, 701, 702, 703, 704, 705) has inner layers (716) arranged in the interior of the stator unit (100, 700, 701, 702, 703, 704, 705), wherein the inner layers (716) of the stator unit (100, 700, 701, 702, 703, 704, 705) are each formed in an alternating manner as two adjacent stator oblique or transverse layers (711) and as two adjacent stator longitudinal layers (710).

7. Stator unit (100, 700, 701, 702, 703, 704, 705) according to one of the preceding claims,
wherein the first coil conductors (125) are configured as conductor strips extended in an elongated manner along the first direction (12), and wherein the second coil conductors (126) are configured as conductor strips extended in an elongated manner along the second direction (14).

8. Stator unit (100, 700, 701, 702, 703, 704, 705) according to one of the preceding claims,
wherein the stator unit (100, 700, 701, 702, 703, 704, 705) is configured as a multi-layered printed circuit board.

9. Stator module (10) having a stator unit (100, 700, 701, 702, 703, 704, 705) according to one of Claims 1 to 8.

## Revendications

1. Unité de stator (100, 700, 701, 702, 703, 704, 705) permettant d'entraîner un rotor (200) d'un moteur planaire électrique (1),
l'unité de stator (100, 700, 701, 702, 703, 704, 705) comprenant un premier agencement de couches de stator longitudinales (710) et un deuxième agencement de couches de stator diagonales ou transversales (711),
les couches de stator longitudinales (710) comprenant des premiers conducteurs de bobine (125), et les couches de stator diagonales ou transversales (711) comprenant des deuxièmes conducteurs de bobine (126),
les deuxièmes conducteurs de bobine (126) étant réalisés pour interagir avec des deuxièmes aimants d'entraînement (221) du rotor (200) afin d'entraîner le rotor (200) dans une première direction (12),
les premiers conducteurs de bobine (125) étant réalisés pour interagir avec des premiers aimants d'entraînement (211) du rotor (200) afin d'entraîner le rotor (200) dans une deuxième direction (14) différente de la première direction (12),
les couches de stator longitudinales (710) et les couches de stator diagonales ou transversales (711) étant disposées les unes au-dessus des autres dans une troisième direction (15) orientée perpendiculairement à la première et à la deuxième direction (12, 14),
**caractérisée en ce que** les couches de stator longitudinales (710) et les couches de stator diagonales et transversales (711) présentent dans la troisième direction (15) la même distance moyenne (718) d'une surface de stator (11) de l'unité de stator (100, 700, 701, 702, 703, 704, 705), la surface de stator (11) étant la surface plane, tournée vers le rotor (200), de l'unité de stator (100, 700, 701, 702, 703, 704, 705).

2. Unité de stator (100, 700, 701, 702, 703, 704, 705) selon la revendication 1, dans laquelle le premier agencement de couches de stator longitudinales (710) et le deuxième agencement de couches de stator diagonales et transversales (711) présentent un plan central commun (108), les couches de stator longitudinales (710) et les couches de stator diagonales et transversales (711) étant disposées dans la troisième direction (15) respectivement de manière symétrique par rapport au plan central commun (108).

3. Unité de stator (100, 700, 701, 702, 703, 704, 705) selon l'une quelconque des revendications précédentes, dans laquelle un premier nombre total de couches de stator longitudinales (710) et un deuxième nombre total de couches de stator diagonales et transversales (711) sont identiques.

4. Unité de stator (100, 700, 701, 702, 703, 704, 705) selon l'une quelconque des revendications précédentes, dans laquelle le premier agencement comprend six couches de stator longitudinales (710) et le deuxième agencement comprend six couches de stator diagonales et transversales (711).

5. Unité de stator (100, 700, 701, 702, 703, 704, 705) selon l'une quelconque des revendications précédentes, dans laquelle une couche de stator la plus haute (712) de l'unité de stator (100, 700, 701, 702, 703, 704, 705) et une couche de stator la plus basse (713) de l'unité de stator (100, 700, 701, 702, 703, 704, 705) sont respectivement réalisées sous la forme d'une couche de stator longitudinale (710) dotée de premiers conducteurs de bobine (125), une deuxième plus haute couche de stator (714) de l'unité de stator (100, 700, 701, 702, 703, 704, 705) et une deuxième plus basse couche de stator (715) de l'unité de stator (100, 700, 701, 702, 703, 704, 705) étant respectivement réalisées sous la forme de couches de stator diagonales et transversales (711) dotées de deuxièmes conducteurs de bobine (126).

6. Unité de stator (100, 700, 701, 702, 703, 704, 705) selon l'une quelconque des revendications précédentes,
l'unité de stator (100, 700, 701, 702, 703, 704, 705) présentant des couches internes (716) disposées à l'intérieur de l'unité de stator (100, 700, 701, 702, 703, 704, 705),
les couches internes (716) de l'unité de stator (100, 700, 701, 702, 703, 704, 705) étant respectivement réalisées en alternance sous la forme de deux couches de stator diagonales et transversales (711) voisines et de deux couches de stator longitudinales (710) voisines.

7. Unité de stator (100, 700, 701, 702, 703, 704, 705) selon l'une quelconque des revendications précédentes, dans laquelle les premiers conducteurs de bobine (125) sont réalisés sous la forme de bandes conductrices allongées le long de la première direction (12), et les deuxièmes conducteurs de bobine (126) étant réalisés sous la forme de bandes conductrices allongées le long de la deuxième direction (14).

8. Unité de stator (100, 700, 701, 702, 703, 704, 705) selon l'une quelconque des revendications précédentes, dans laquelle l'unité de stator (100, 700, 701, 702, 703, 704, 705) est réalisée sous la forme d'une carte de circuits imprimés multicouche.

9. Module de stator (10) comprenant une unité de stator (100, 700, 701, 702, 703, 704, 705) selon l'une quelconque des revendications 1 à 8.
